# EUROPEAN PATENT APPLICATION

(11) **EP 4 797 829 A1**
(43) Date of publication of application: **26.08.2026**
(21) Application number: 24887637.7
(22) Date of filing: 18.09.2024
(51) Int. Cl.: H04W 72/04

(54) **COMMUNICATION METHOD AND COMMUNICATION APPARATUS**

(30) Priority: 07.11.2023 CN 202311479950
(71) Applicant: HUAWEI TECHNOLOGIES CO., LTD., Shenzhen, Guangdong 518129 (CN)
(72) Inventor: ZHANG, Xi, Shenzhen, Guangdong 518129 (CN); BI, Xiaoyan, Shenzhen, Guangdong 518129 (CN); MA, Jianglei, Shenzhen, Guangdong 518129 (CN); TONG, Wen, Shenzhen, Guangdong 518129 (CN)
(74) Representative: Pfenning, Meinig & Partner mbB
(86) International application number: PCT/CN2024/119330
(87) International publication number: WO 2025/098019

(57) **Abstract**

This application provides a communication method and a communication apparatus. The method includes: sending configuration information, where the configuration information includes first information, or the configuration information includes the first information and second information; and the first information indicates a group identifier ID of at least one beam group and an ID of a beam, and the second information indicates a beam group characteristic; and receiving measurement feedback information, where the measurement feedback information includes a group ID of a target beam group, and the target beam group belongs to the at least one beam group. In the communication method and the communication apparatus in this application, a network device configures, for a terminal device, grouping information of a beam group and/or information indicating a beam group characteristic, so that a delay and overheads during beam measurement by the terminal device can be reduced, a purpose of reporting measurement feedback information by the terminal device can be enhanced, and a possibility of performing concurrent beam transmission by the network device can be increased.

## Description

This application claims priority to Chinese Patent Application No. 202311479950.2, filed with the China National Intellectual Property Administration on November 7, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A network device and a terminal device need to perform beam alignment for subsequent data transmission. However, to maintain a state of beam alignment between the network device and the terminal device, the terminal device needs to measure a beam based on a reference signal sent by the network device, and report a measurement result to the network device. In addition, the network device indicates, to the terminal device, a reference signal resource identifier corresponding to a serving beam and/or a quasi-co-location (quasi-co-location, QCL) relationship between the reference signal resource identifier corresponding to the serving beam and a reference resource identifier corresponding to the measured beam. This process usually needs to be continuously performed. In addition, as communication requirement increase and capabilities of the network device improve, in a next-generation wireless communication technology, the network device supports concurrent transmission of a plurality of beams.

Therefore, how to reduce overheads and a delay when the terminal device performs beam measurement, to increase a possibility of performing concurrent beam transmission by the network device is an urgent problem to be resolved currently.

### SUMMARY

This application provides a communication method and a communication apparatus. In the method, a network device sends configuration information to a terminal device, and the terminal device selects a target beam group based on the configuration information and reports the target beam group. This reduces measurement overheads of the terminal device, and increases a possibility of performing concurrent beam transmission by the network device. It may be understood that in some scenarios, for example, in a device-to-device (device-to-device, D2D) communication scenario, a first terminal device may send configuration information to a second terminal device, and the second terminal device selects a target beam group based on the configuration information and reports the target beam group. This reduces measurement overheads of the terminal device, and increases a possibility of performing concurrent beam transmission by the terminal device.

According to a first aspect, a communication method is provided. The method may be performed by an apparatus. The apparatus may be a device (for example, a network device or a terminal device), or may be a component (for example, a chip, a chip system, or a circuit) of the device. This is not limited in this application. The method includes: sending configuration information, where the configuration information includes first information, or the configuration information includes the first information and second information; and the first information indicates a group identifier ID of at least one beam group and an ID of a beam, and the second information indicates a beam group characteristic; and receiving measurement feedback information, where the measurement feedback information includes a group ID of a target beam group, and the target beam group belongs to the at least one beam group.

It should be noted that a network device may transmit the configuration information by using radio resource control (radio resource control, RRC) signaling or a system message (for example, a master information block (master information block, MIB) or a system information block (system information block, SIB)).

For example, the first information may be concurrent beam grouping information. For example, the first information indicates a beam group 1, and a beam 0, a beam 1, a beam 2, and a beam 3 that are included in the beam group 1.

It should be noted that the beam may alternatively represent or be replaced with a transmission point, a pilot, a direction, an angle, a weight, an angle range, or a coverage area.

Based on the foregoing solution, the network device configures, for a terminal device, grouping information of a beam group and/or information indicating a beam group characteristic, so that a delay and overheads during beam measurement by the terminal device can be reduced, a purpose of reporting measurement feedback information by the terminal device can be enhanced, and a possibility of performing concurrent beam transmission by the network device can be increased.

With reference to the first aspect, in some implementations of the first aspect, the configuration information includes beam spatial domain angle information, the beam spatial domain angle information is used to determine a spatial domain angle of the beam, and the spatial domain angle of the beam includes a zenith angle of the beam and/or an azimuth of the beam.

Based on the foregoing solution, the network device may explicitly configure the spatial domain angle information for the terminal device, so that the terminal device determines the spatial domain angle of the beam or a spatial domain angle of the beam group based on the spatial domain angle information, to assist the terminal device in selecting a corresponding target beam or target beam group.

With reference to the first aspect, in some implementations of the first aspect, the beam spatial domain angle information includes an ID of a first reference beam and beam spatial domain angle information of the first reference beam.

It should be noted that the first reference beam is a beam that belongs to a candidate beam group configured by the network device. Reference beams in different candidate beam groups may be different. The beam spatial domain angle information of the first reference beam includes a zenith angle and/or an azimuth of the first reference beam.

With reference to the first aspect, in some implementations of the first aspect, the beam spatial domain angle information includes a first intra-group beam angle offset rule, the first intra-group beam angle offset rule is used to determine a spatial domain angle of a beam other than the first reference beam in a first beam group, and the first beam group belongs to the at least one beam group.

It should be noted that the first beam group is one of at least one candidate beam group configured by the network device. The network device may configure the intra-group beam angle offset rule for the terminal device, so that the terminal device determines a spatial domain angle of another beam in the first beam group, to obtain accurate spatial domain angle information of each beam in the first beam group, thereby improving reporting accuracy.

For example, the network device configures the at least one beam group (including the first beam group) for the terminal device, and configures an ID of a beam 0 in the first beam group, and an azimuth and/or a zenith angle of the beam 0 for the terminal device. The beam 0 is a reference beam (the first reference beam) in the first beam group, and the first beam group further includes a beam 1, a beam 2, and a beam 3. The terminal device may obtain, through calculation, azimuths and/or zenith angles of the beam 1, the beam 2, and the beam 3 in the first beam group according to the first intra-group beam angle offset rule and based on the ID of the beam 0, and the azimuth and/or the zenith angle of the beam 0.

With reference to the first aspect, in some implementations of the first aspect, the beam spatial domain angle information includes an ID of a second reference beam and beam spatial domain angle information of the second reference beam.

It should be noted that the second reference beam is a beam that belongs to a candidate beam group configured by the network device. Reference beams in different candidate beam groups may be different. The beam spatial domain angle information of the second reference beam includes a zenith angle and/or an azimuth of the second reference beam.

With reference to the first aspect, in some implementations of the first aspect, the first intra-group beam angle offset rule is further used to determine a spatial domain angle of a beam other than the second reference beam in a second beam group, and the second beam group belongs to the at least one beam group.

It should be understood that the intra-group beam angle offset rule configured by the network device for the terminal device may be common or may be specific.

It should be noted that when the intra-group beam angle offset rule is common (for example, the first intra-group beam angle offset rule), the second beam group is one of at least one candidate beam group configured by the network device. The network device may configure a common intra-group beam angle offset rule for the terminal device, so that the terminal device determines a spatial domain angle of a beam in the second beam group other than the first beam group, to obtain accurate spatial domain angle information of each beam in the second beam group, thereby improving reporting accuracy.

For example, the network device configures the at least one beam group (including the second beam group) for the terminal device, and configures an ID of a beam 4 in the second beam group, and an azimuth and/or a zenith angle of the beam 4 for the terminal device. The beam 4 is a reference beam (the second reference beam) in the second beam group, and the second beam group further includes a beam 5, a beam 6, and a beam 7. The terminal device may obtain, through calculation, azimuths and/or zenith angles of the beam 5, the beam 6, and the beam 7 in the second beam group according to the first intra-group beam angle offset rule and based on the ID of the beam 4, and the azimuth and/or the zenith angle of the beam 4.

With reference to the first aspect, in some implementations of the first aspect, the beam spatial domain angle information includes a second intra-group beam angle offset rule, the second intra-group beam angle offset rule is used to determine a spatial domain angle of a beam other than the second reference beam in a second beam group, and the second beam group belongs to the at least one beam group.

It should be noted that when the intra-group beam angle offset rule is specific, for example, the network device configures the first intra-group beam angle offset rule for the first beam group, and configures the second intra-group beam angle offset rule for the second beam group, the terminal device may separately determine spatial domain angles of beams in different beam groups according to specific intra-group beam angle offset rules.

For example, the network device configures the at least one beam group (including the second beam group) for the terminal device, and configures an ID of a beam 4 in the second beam group, and an azimuth and/or a zenith angle of the beam 4 for the terminal device. The beam 4 is a reference beam (the second reference beam) in the second beam group, and the second beam group further includes a beam 5, a beam 6, and a beam 7. The terminal device may obtain, through calculation, azimuths and/or zenith angles of the beam 5, the beam 6, and the beam 7 in the second beam group according to the second intra-group beam angle offset rule and based on the ID of the beam 4, and the azimuth and/or the zenith angle of the beam 4.

With reference to the first aspect, in some implementations of the first aspect, the beam spatial domain angle information includes a group ID of a reference beam group and beam spatial domain angle information of the reference beam group, the spatial domain angle of the beam is a spatial domain angle of a beam group other than the reference beam group, and the reference beam group belongs to the at least one beam group.

It should be noted that the reference beam group is a beam group that belongs to a candidate beam group configured by the network device. The reference beam group may be fixed or variable. The spatial domain angle of the beam group includes a zenith angle and/or an azimuth of the beam group.

With reference to the first aspect, in some implementations of the first aspect, the beam spatial domain angle information includes an inter-group beam angle offset rule.

It should be noted that the network device may configure the inter-group beam angle offset rule for the terminal device, so that the terminal device determines a spatial domain angle of each beam group, thereby improving reporting accuracy.

For example, the network device configures the first beam group and the second beam group for the terminal device. The first beam group is a reference beam. The terminal device may obtain, through calculation, beam spatial domain angle information of the second beam group according to the inter-group beam angle offset rule and based on the ID of the first beam group and beam spatial domain angle information of the first beam group.

It should be understood that the inter-group beam angle offset rule may be common or may be specific. For example, the network device may configure one reference beam group for a plurality of candidate beam groups, and configure a common inter-group beam angle offset rule for the terminal device, so that the terminal device determines spatial domain angle information of a beam group other than the reference beam group according to the common inter-group beam angle offset rule. Similarly, the network device may configure different inter-group beam angle offset rules for the terminal device based on different candidate beam groups, so that the terminal device separately determines spatial domain angle information of different beam groups according to specific inter-group beam angle offset rules.

With reference to the first aspect, in some implementations of the first aspect, the beam spatial domain angle information includes a fine offset and/or uncertainty information, and the fine offset and/or the uncertainty information are/is used to determine an angle jitter and a deviation of the beam.

For example, the fine offset is more refined than the spatial domain angle information. A width of the zenith angle and a width of the azimuth are measured in degrees, and the fine offset is measured in 0.1 degree. The uncertainty information may be a maximum error of an angle, a width, or a fine offset. For example, if the network device indicates, to the terminal device, that a width of a specific beam is x degrees, and the uncertainty information indicates that a maximum error of the width is y degrees, the width of the beam is within a range of [x-y, x+y].

With reference to the first aspect, in some implementations of the first aspect, the measurement feedback information includes an ID and/or beam quality information of a target beam, and the target beam is one or more beams in the target beam group.

Based on the foregoing solution, the terminal device may measure, based on the configuration information, the candidate beam configured by the network device, select the target beam group, select the target beam in the target beam group and the beam quality information, and report the foregoing information to the network device. This enhances a reporting purpose of the terminal device, and increases a possibility of performing concurrent beam transmission by the network device.

With reference to the first aspect, in some implementations of the first aspect, the beam quality information includes one or more of the following: channel state information CSI, a signal-to-interference-plus-noise ratio SINR, or a reference signal received power RSRP.

It should be noted that specific content of the beam quality information is related to a measurement target.

With reference to the first aspect, in some implementations of the first aspect, when the measurement target is single-user SU multi-beam transmission, the beam quality information is the CSI, and the CSI includes one of the following: a precoding indicator PMI, a rank indicator RI, or a channel quality indicator CQI.

For example, if a beam measurement target configured by the network device or autonomously selected by the terminal device is single-user (single-user, SU) multi-beam transmission (or a higher capacity), the terminal device may select a plurality of beams in a same beam group, and calculate channel state information (channel state information, CSI) for multi-beam joint transmission. The CSI obtained through calculation indicates beam quality of the plurality of beams selected by the terminal device. The CSI may include a precoding indicator (precoding matrix indicator, PMI), a rank indicator (rank indicator, RI), or a channel quality indicator (channel quality indicator, CQI). The terminal device may notify the network device of an optimal precoding matrix by using the PMI, the terminal device may notify the network device of an optimal quantity of layers for transmission by using the RI, and the terminal device may notify the network device of a highest available modulation and coding scheme.

With reference to the first aspect, in some implementations of the first aspect, when the measurement target is multi-user MU multi-beam pairing, the beam quality information is the SINR.

For example, if a beam measurement target configured by the network device or autonomously selected by the terminal device is multi-user (multi-user, MU) multi-beam pairing, the terminal device may select one beam in a same beam group, use the beam as a serving beam, use another beam in the same beam group as an interference beam, and obtain a signal-to-interference-plus-noise ratio (signal-to-interference-plus-noise ratio, SINR) through calculation. The SINR indicates beam quality of the beam selected by the terminal device.

With reference to the first aspect, in some implementations of the first aspect, the ID of the target beam indicates one of the following: an ID of a serving beam or an ID of an interference beam; and the serving beam and the interference beam belong to the target beam group, and the interference beam is a beam in the target beam group other than the serving beam.

It should be noted that the target beam determined by the terminal device may be the serving beam, or may be the interference beam. In view of this, when the measurement target is multi-user multi-beam pairing, the terminal device may calculate the SINR based on the determined serving beam, or calculate the SINR based on the determined interference beam.

With reference to the first aspect, in some implementations of the first aspect, the beam group characteristic includes at least one of the following: an intra-group concurrent beam transmission characteristic or an intra-group beam spatial isolation characteristic; and the intra-group concurrent beam transmission characteristic indicates concurrent beam transmission in the target beam group, and the intra-group beam spatial isolation characteristic indicates that beam spatial isolation in the target beam group is greater than or equal to a first isolation threshold.

It should be noted that the intra-group concurrent beam transmission characteristic may be understood as simultaneous transmission, parallel transmission, or the like of at least two beams in a group. In a same time domain unit, transmitting a plurality of beams may be understood as concurrent transmission. For example, at least two beams are transmitted in one slot (slot).

For example, spatial isolation between beams may be measured by using a difference between beam center angles. For example, when the beam spatial isolation in the group is greater than or equal to the first isolation threshold, it may be considered that the beam spatial isolation in the group is high. The first isolation threshold is the difference of 20 degrees between the beam center angles. It should be understood that the difference of 20 degrees between the beam center angles is merely an example for description. A specific value of the first isolation threshold is not limited in this embodiment of this application. Different values of the first isolation threshold may be preset based on actual situations. Certainly, that the spatial isolation between the beams is measured by using the difference between the beam center angles is also an example for description. Alternatively, the spatial isolation between the beams may be measured by using a difference between beam peak angles. This is not limited in this embodiment of this application.

Optionally, whether spatial domain angles between the beams are close may be measured by using the difference between the beam center angles or the difference between the peak angles. For example, when the difference between the beam center angles or the difference between the peak angles is less than the first isolation threshold, it may be considered that the spatial domain angles between the beams are close. Alternatively, whether spatial domain angles between the beams are close may be measured by using whether half-power beam widths (half-power beam widths, HPBW) of the beams overlap. For example, when the HPBWs of the beams overlap, it may be considered that the spatial domain angles between the beams are close. It should be noted that whether the spatial domain angles between the beams are close is measured by using the difference between the beam center angles or the difference between the peak angles and whether the HPBWs of the beams overlap is merely an example for description. A specific manner of determining whether the spatial domain angles are close is not limited in this embodiment of this application.

According to a second aspect, a communication method is provided. The method may be performed by an apparatus. The apparatus may be a device (for example, a terminal device), or may be a component (for example, a chip, a chip system, or a circuit) of the device. This is not limited in this application. The method includes: receiving configuration information, where the configuration information includes first information, or the configuration information includes the first information and second information; and the first information indicates a group identifier ID of at least one beam group and an ID of a beam, and the second information indicates a beam group characteristic; and sending measurement feedback information based on the configuration information, where the measurement feedback information includes a group ID of a target beam group, and the target beam group belongs to the beam group.

For example, the first information may be concurrent beam grouping information. For example, the first information indicates a beam group 1, and a beam 0, a beam 1, a beam 2, and a beam 3 that are included in the beam group 1.

Based on the foregoing solution, a terminal device receives grouping information of a beam group and/or information indicating a beam group characteristic that are/is configured by a network device, so that overheads and a delay during beam measurement by the terminal device can be reduced, a purpose of reporting measurement feedback information by the terminal device can be enhanced, and a possibility of performing concurrent beam transmission by the network device can be increased.

With reference to the second aspect, in some implementations of the second aspect, the configuration information includes beam spatial domain angle information; and before sending the measurement feedback information based on the configuration information, the method further includes: determining a spatial domain angle of the beam based on the beam spatial domain angle information, where the spatial domain angle of the beam includes a zenith angle of the beam and/or an azimuth of the beam.

Based on the foregoing solution, the terminal device may determine spatial domain angle information of the beam or spatial domain angle information of a beam group based on the spatial domain angle information explicitly configured by the network device, to assist the terminal device in selecting a corresponding target beam or target beam group.

With reference to the second aspect, in some implementations of the second aspect, the beam spatial domain angle information includes an ID of a first reference beam and beam spatial domain angle information of the first reference beam.

It should be noted that the first reference beam is a beam that belongs to a candidate beam group configured by the network device. Reference beams in different candidate beam groups may be different. The beam spatial domain angle information of the first reference beam includes a zenith angle and/or an azimuth of the first reference beam.

With reference to the second aspect, in some implementations of the second aspect, the beam spatial domain angle includes a first intra-group beam angle offset rule, and determining the spatial domain angle of the beam based on the beam spatial domain angle information includes: determining, according to the first intra-group beam angle offset rule and based on the ID of the first reference beam and the beam spatial domain angle information of the first reference beam, a spatial domain angle of a beam other than the first reference beam in a first beam group, where the first beam group belongs to the at least one beam group.

It should be noted that the terminal device may determine a spatial domain angle of another beam in the first beam group according to the intra-group beam angle offset rule configured by the network device, to obtain accurate spatial domain angle information of each beam in the first beam group, thereby improving reporting accuracy.

With reference to the second aspect, in some implementations of the second aspect, the beam spatial domain angle information includes an ID of a second reference beam and beam spatial domain angle information of the second reference beam.

It should be noted that the second reference beam is a beam that belongs to a candidate beam group configured by the network device. Reference beams in different candidate beam groups may be different. The beam spatial domain angle information of the second reference beam includes a zenith angle and/or an azimuth of the second reference beam.

With reference to the second aspect, in some implementations of the second aspect, the method further includes: determining, according to the first intra-group beam angle offset rule and based on the ID of the second reference beam and the beam spatial domain angle information of the second reference beam, a spatial domain angle of a beam other than the second reference beam in a second beam group, where the second beam group belongs to the at least one beam group.

It should be understood that the intra-group beam angle offset rule received by the terminal device from the network device may be common or may be specific.

It should be noted that when the intra-group beam angle offset rule is common (for example, the first intra-group beam angle offset rule), the second beam group is one of at least one candidate beam group configured by the network device. The terminal device may determine, according to a common intra-group beam angle offset rule configured by the network device, a spatial domain angle of a beam in the second beam group other than the first beam group, to obtain accurate spatial domain angle information of each beam in the second beam group, thereby improving reporting accuracy.

With reference to the second aspect, in some implementations of the second aspect, the beam spatial domain angle information includes a second intra-group beam angle offset rule, and the method further includes: determining, according to the second intra-group beam angle offset rule and based on the ID of the second reference beam and the beam spatial domain angle information of the second reference beam, a spatial domain angle of a beam other than the second reference beam in a second beam group, where the second beam group belongs to the at least one beam group.

It should be noted that when the intra-group beam angle offset rule is specific, for example, the terminal device receives the first intra-group beam angle offset rule and the second intra-group beam angle offset rule that are configured by the network device, the terminal device separately determines spatial domain angles of beams in different beam groups according to specific intra-group beam angle offset rules.

With reference to the second aspect, in some implementations of the second aspect, the beam spatial domain angle information includes a group ID of a reference beam group and beam spatial domain angle information of the reference beam group, the spatial domain angle of the beam is a spatial domain angle of a beam group other than the reference beam group, and the reference beam group belongs to the at least one beam group.

It should be noted that the reference beam group is a beam group that belongs to a candidate beam group configured by the network device. The reference beam group may be fixed or variable. The spatial domain angle of the beam group includes a zenith angle and/or an azimuth of the beam group.

With reference to the second aspect, in some implementations of the second aspect, the beam spatial domain angle information includes an inter-group beam angle offset rule, and determining the spatial domain angle of the beam based on the beam spatial domain angle information includes: determining, according to the inter-group beam angle offset rule and based on the group ID of the reference beam group and the beam spatial domain angle information of the reference beam group, the spatial domain angle of the beam group other than the reference beam group.

It should be noted that the terminal device may determine a spatial domain angle of each beam group according to the inter-group beam angle offset rule configured by the network device, thereby improving reporting accuracy.

It should be understood that the inter-group beam angle offset rule may be common or may be specific. For example, the network device may configure one reference beam group for a plurality of candidate beam groups, and configure a common inter-group beam angle offset rule for the terminal device, so that the terminal device determines spatial domain angle information of a beam group other than the reference beam group according to the common inter-group beam angle offset rule. Similarly, the network device may configure different inter-group beam angle offset rules for the terminal device based on different candidate beam groups, so that the terminal device separately determines spatial domain angle information of different beam groups according to specific inter-group beam angle offset rules.

With reference to the second aspect, in some implementations of the second aspect, the beam spatial domain angle information includes a fine offset and/or uncertainty information, and the fine offset and/or the uncertainty information are/is used to determine an angle jitter and a deviation of the beam.

For example, the fine offset is more refined than the spatial domain angle information. A width of the zenith angle and a width of the azimuth are measured in degrees, and the fine offset is measured in 0.1 degree. The uncertainty information may be a maximum error of an angle, a width, or a fine offset. For example, if the network device indicates, to the terminal device, that a width of a specific beam is x degrees, and the uncertainty information indicates that a maximum error of the width is y degrees, the width of the beam is within a range of [x-y, x+y].

With reference to the second aspect, in some implementations of the second aspect, the measurement feedback information includes an ID and/or beam quality information of a target beam, and the target beam is one or more beams in the target beam group; and before sending the measurement feedback information to the network device based on the configuration information, the method further includes: determining the ID of the target beam group, the ID of the target beam, and the beam quality information based on the configuration information.

Based on the foregoing solution, the terminal device may measure, based on the configuration information, the candidate beam configured by the network device, select the target beam group, select the target beam in the target beam group and the beam quality information, and report the foregoing information to the network device. This enhances a reporting purpose of the terminal device, and increases a possibility of performing concurrent beam transmission by the network device.

With reference to the second aspect, in some implementations of the second aspect, the beam quality information includes one or more of the following: channel state information CSI, a signal-to-interference-plus-noise ratio SINR, or a reference signal received power RSRP.

It should be noted that specific content of the beam quality information is related to a measurement target.

With reference to the second aspect, in some implementations of the second aspect, determining the ID of the target beam group, the ID of the target beam, and the beam quality information based on the configuration information includes: when a measurement target is single-user SU multi-beam transmission, determining the group ID of the target beam group, the ID of the target beam, and the CSI based on the configuration information, where the CSI includes one of the following: a precoding indicator PMI, a rank indicator RI, or a channel quality indicator CQI.

For example, if a beam measurement target configured by the network device or autonomously selected by the terminal device is single-user (single-user, SU) multi-beam transmission (or a higher capacity), the terminal device may select a plurality of beams in a same beam group, and calculate channel state information (channel state information, CSI) for multi-beam joint transmission. The CSI obtained through calculation indicates beam quality of the plurality of beams selected by the terminal device. The CSI may include a precoding indicator (precoding matrix indicator, PMI), a rank indicator (rank indicator, RI), or a channel quality indicator (channel quality indicator, CQI). The terminal device may notify the network device of an optimal precoding matrix by using the PMI, the terminal device may notify the network device of an optimal quantity of layers for transmission by using the RI, and the terminal device may notify the network device of a highest available modulation and coding scheme.

With reference to the second aspect, in some implementations of the second aspect, determining the ID of the target beam group, the ID of the target beam, and the beam quality information based on the configuration information includes: when a measurement target is multi-user MU multi-beam pairing, determining the group ID of the target beam group, the ID of the target beam, and the SINR based on the configuration information.

For example, if a beam measurement target configured by the network device or autonomously selected by the terminal device is multi-user (multi-user, MU) multi-beam pairing, the terminal device may select one beam in a same beam group, use the beam as a serving beam, use another beam in the same beam group as an interference beam, and obtain a signal-to-interference-plus-noise ratio (signal-to-interference-plus-noise ratio, SINR) through calculation. The SINR indicates beam quality of the beam selected by the terminal device.

With reference to the second aspect, in some implementations of the second aspect, the ID of the target beam indicates one of the following: an ID of a serving beam or an ID of an interference beam; and the serving beam and the interference beam belong to the target beam group, and the interference beam is a beam in the target beam group other than the serving beam.

It should be noted that the target beam determined by the terminal device may be the serving beam, or may be the interference beam. In view of this, when the measurement target is multi-user multi-beam pairing, the terminal device may calculate the SINR based on the determined serving beam, or calculate the SINR based on the determined interference beam.

With reference to the second aspect, in some implementations of the second aspect, the beam group characteristic includes at least one of the following: an intra-group concurrent beam transmission characteristic or an intra-group beam spatial isolation characteristic; and the intra-group concurrent beam transmission characteristic indicates concurrent beam transmission in the target beam group, and the intra-group beam spatial isolation characteristic indicates that beam spatial isolation in the target beam group is greater than or equal to a first isolation threshold.

It should be noted that the intra-group concurrent beam transmission characteristic may be understood as simultaneous transmission, parallel transmission, or the like of at least two beams in a group. In a same time domain unit, transmitting a plurality of beams may be understood as concurrent transmission. For example, at least two beams are transmitted in one slot (slot).

For example, spatial isolation between beams may be measured by using a difference between beam center angles. For example, when the beam spatial isolation in the group is greater than or equal to the first isolation threshold, it may be considered that the beam spatial isolation in the group is high. The first isolation threshold is the difference of 20 degrees between the beam center angles. It should be understood that the difference of 20 degrees between the beam center angles is merely an example for description. A specific value of the first isolation threshold is not limited in this embodiment of this application. Different values of the first isolation threshold may be preset based on actual situations. Certainly, that the spatial isolation between the beams is measured by using the difference between the beam center angles is also an example for description. Alternatively, the spatial isolation between the beams may be measured by using a difference between beam peak angles. This is not limited in this embodiment of this application.

Optionally, whether spatial domain angles between the beams are close may be measured by using the difference between the beam center angles or the difference between the peak angles. For example, when the difference between the beam center angles or the difference between the peak angles is less than the first isolation threshold, it may be considered that the spatial domain angles between the beams are close. Alternatively, whether spatial domain angles between the beams are close may be measured by using whether half-power beam widths (half-power beam widths, HPBW) of the beams overlap. For example, when the HPBWs of the beams overlap, it may be considered that the spatial domain angles between the beams are close. It should be noted that whether the spatial domain angles between the beams are close is measured by using the difference between the beam center angles or the difference between the peak angles and whether the HPBWs of the beams overlap is merely an example for description. A specific manner of determining whether the spatial domain angles are close is not limited in this embodiment of this application.

According to a third aspect, a communication apparatus is provided. The communication apparatus includes: a transceiver unit, configured to send configuration information, where the configuration information includes first information, or the configuration information includes the first information and second information; and the first information indicates a group identifier ID of at least one beam group and an ID of a beam, and the second information indicates a beam group characteristic. The transceiver unit is further configured to receive measurement feedback information, where the measurement feedback information includes a group ID of a target beam group, and the target beam group belongs to the at least one beam group.

With reference to the third aspect, in some implementations of the third aspect, the configuration information includes beam spatial domain angle information, the beam spatial domain angle information is used to determine a spatial domain angle of the beam, and the spatial domain angle of the beam includes a zenith angle of the beam and/or an azimuth of the beam.

With reference to the third aspect, in some implementations of the third aspect, the beam spatial domain angle information includes an ID of a first reference beam and beam spatial domain angle information of the first reference beam.

With reference to the third aspect, in some implementations of the third aspect, the beam spatial domain angle information includes a first intra-group beam angle offset rule, the first intra-group beam angle offset rule is used to determine a spatial domain angle of a beam other than the first reference beam in a first beam group, and the first beam group belongs to the at least one beam group.

With reference to the third aspect, in some implementations of the third aspect, the beam spatial domain angle information includes an ID of a second reference beam and beam spatial domain angle information of the second reference beam.

With reference to the third aspect, in some implementations of the third aspect, the first intra-group beam angle offset rule is further used to determine a spatial domain angle of a beam other than the second reference beam in a second beam group, and the second beam group belongs to the at least one beam group.

With reference to the third aspect, in some implementations of the third aspect, the beam spatial domain angle information includes a second intra-group beam angle offset rule, the second intra-group beam angle offset rule is used to determine a spatial domain angle of a beam other than the second reference beam in a second beam group, and the second beam group belongs to the at least one beam group.

With reference to the third aspect, in some implementations of the third aspect, the beam spatial domain angle information includes a group ID of a reference beam group and beam spatial domain angle information of the reference beam group, the spatial domain angle of the beam is a spatial domain angle of a beam group other than the reference beam group, and the reference beam group belongs to the at least one beam group.

With reference to the third aspect, in some implementations of the third aspect, the beam spatial domain angle information includes an inter-group beam angle offset rule.

With reference to the third aspect, in some implementations of the third aspect, the beam spatial domain angle information includes a fine offset and/or uncertainty information, and the fine offset and/or the uncertainty information are/is used to determine an angle jitter and a deviation of the beam.

With reference to the third aspect, in some implementations of the third aspect, the measurement feedback information includes an ID and/or beam quality information of a target beam, and the target beam is one or more beams in the target beam group.

With reference to the third aspect, in some implementations of the third aspect, the beam quality information includes one or more of the following: channel state information CSI, a signal-to-interference-plus-noise ratio SINR, or a reference signal received power RSRP.

With reference to the third aspect, in some implementations of the third aspect, when a measurement target is single-user SU multi-beam transmission, the beam quality information is the CSI, and the CSI includes one of the following: a precoding indicator PMI, a rank indicator RI, or a channel quality indicator CQI.

With reference to the third aspect, in some implementations of the third aspect, when a measurement target is multi-user MU multi-beam pairing, the beam quality information is the SINR.

With reference to the third aspect, in some implementations of the third aspect, the ID of the target beam indicates one of the following: an ID of a serving beam or an ID of an interference beam; and the serving beam and the interference beam belong to the target beam group, and the interference beam is a beam in the target beam group other than the serving beam.

With reference to the third aspect, in some implementations of the third aspect, the beam group characteristic includes at least one of the following: an intra-group concurrent beam transmission characteristic or an intra-group beam spatial isolation characteristic; and the intra-group concurrent beam transmission characteristic indicates concurrent beam transmission in the target beam group, and the intra-group beam spatial isolation characteristic indicates that beam spatial isolation in the target beam group is greater than or equal to a first isolation threshold.

According to a fourth aspect, a communication apparatus is provided. The communication apparatus includes: a transceiver unit, configured to receive configuration information, where the configuration information includes first information, or the configuration information includes the first information and second information; and the first information indicates a group identifier ID of at least one beam group and an ID of a beam, and the second information indicates a beam group characteristic. The transceiver unit is further configured to send measurement feedback information based on the configuration information, where the measurement feedback information includes a group ID of a target beam group, and the target beam group belongs to the beam group.

With reference to the fourth aspect, in some implementations of the fourth aspect, the configuration information includes beam spatial domain angle information, and the apparatus further includes a processing unit, configured to determine a spatial domain angle of the beam based on the beam spatial domain angle information, where the spatial domain angle of the beam includes a zenith angle of the beam and/or an azimuth of the beam.

With reference to the fourth aspect, in some implementations of the fourth aspect, the beam spatial domain angle information includes an ID of a first reference beam and beam spatial domain angle information of the first reference beam.

With reference to the fourth aspect, in some implementations of the fourth aspect, the beam spatial domain angle includes a first intra-group beam angle offset rule, and the processing unit is specifically configured to: determine, according to the first intra-group beam angle offset rule and based on the ID of the first reference beam and the beam spatial domain angle information of the first reference beam, a spatial domain angle of a beam other than the first reference beam in a first beam group, where the first beam group belongs to the at least one beam group.

With reference to the fourth aspect, in some implementations of the fourth aspect, the beam spatial domain angle information includes an ID of a second reference beam and beam spatial domain angle information of the second reference beam.

With reference to the fourth aspect, in some implementations of the fourth aspect, the processing unit is further configured to determine, according to the first intra-group beam angle offset rule and based on the ID of the second reference beam and the beam spatial domain angle information of the second reference beam, a spatial domain angle of a beam other than the second reference beam in a second beam group, where the second beam group belongs to the at least one beam group.

With reference to the fourth aspect, in some implementations of the fourth aspect, the beam spatial domain angle information includes a second intra-group beam angle offset rule, and the processing unit is further configured to determine, according to the second intra-group beam angle offset rule and based on the ID of the second reference beam and the beam spatial domain angle information of the second reference beam, a spatial domain angle of a beam other than the second reference beam in a second beam group, where the second beam group belongs to the at least one beam group.

With reference to the fourth aspect, in some implementations of the fourth aspect, the beam spatial domain angle information includes a group ID of a reference beam group and beam spatial domain angle information of the reference beam group, the spatial domain angle of the beam is a spatial domain angle of a beam group other than the reference beam group, and the reference beam group belongs to the at least one beam group.

With reference to the fourth aspect, in some implementations of the fourth aspect, the beam spatial domain angle information includes an inter-group beam angle offset rule, and the processing unit is specifically configured to determine, according to the inter-group beam angle offset rule and based on the group ID of the reference beam group and the beam spatial domain angle information of the reference beam group, the spatial domain angle of the beam group other than the reference beam group.

With reference to the fourth aspect, in some implementations of the fourth aspect, the beam spatial domain angle information includes a fine offset and/or uncertainty information, and the fine offset and/or the uncertainty information are/is used to determine an angle jitter and a deviation of the beam.

With reference to the fourth aspect, in some implementations of the fourth aspect, the measurement feedback information includes an ID and/or beam quality information of a target beam, and the target beam is one or more beams in the target beam group; and before sending the measurement feedback information based on the configuration information, the processing unit is further configured to determine the ID of the target beam group, the ID of the target beam, and the beam quality information based on the configuration information.

With reference to the fourth aspect, in some implementations of the fourth aspect, the beam quality information includes one or more of the following: channel state information CSI, a signal-to-interference-plus-noise ratio SINR, or a reference signal received power RSRP.

With reference to the fourth aspect, in some implementations of the fourth aspect, the processing unit is specifically configured to: when a measurement target is single-user SU multi-beam transmission, determine the group ID of the target beam group, the ID of the target beam, and the CSI based on the configuration information, where the CSI includes one of the following: a precoding indicator PMI, a rank indicator RI, or a channel quality indicator CQI.

With reference to the fourth aspect, in some implementations of the fourth aspect, the processing unit is specifically configured to: when a measurement target is multi-user MU multi-beam pairing, determine the group ID of the target beam group, the ID of the target beam, and the SINR based on the configuration information.

With reference to the fourth aspect, in some implementations of the fourth aspect, the ID of the target beam indicates one of the following: an ID of a serving beam or an ID of an interference beam; and the serving beam and the interference beam belong to the target beam group, and the interference beam is a beam in the target beam group other than the serving beam.

With reference to the fourth aspect, in some implementations of the fourth aspect, the beam group characteristic includes at least one of the following: an intra-group concurrent beam transmission characteristic or an intra-group beam spatial isolation characteristic; and the intra-group concurrent beam transmission characteristic indicates concurrent beam transmission in the target beam group, and the intra-group beam spatial isolation characteristic indicates that beam spatial isolation in the target beam group is greater than or equal to a first isolation threshold.

According to a fifth aspect, a communication apparatus is provided. The communication apparatus includes a processor coupled to a memory. The memory is configured to store a computer program, and the processor is configured to run the computer program, so that the communication apparatus performs the method according to any one of the first aspect and the possible implementations of the first aspect.

According to a sixth aspect, a communication apparatus is provided. The communication apparatus includes a processor coupled to a memory. The memory is configured to store a computer program, and the processor is configured to run the computer program, so that the communication apparatus performs the method according to any one of the second aspect and the possible implementations of the second aspect.

According to a seventh aspect, a computer-readable storage medium is provided. The computer-readable storage medium stores a computer program. When the computer program is executed by a computer, the computer is enabled to perform the communication method according to any one of the first aspect and the possible implementations of the first aspect, or the second aspect and the possible implementations of the second aspect.

According to an eighth aspect, a computer program product including instructions is provided. When the computer program product is run on a computer, the computer is enabled to perform the communication method according to any one of the first aspect and the possible implementations of the first aspect, or the second aspect and the possible implementations of the second aspect.

According to a ninth aspect, a chip is provided. The chip includes a processor and a data interface. The processor reads, through the data interface, instructions stored in a memory, to perform the communication method according to any one of the first aspect and the possible implementations of the first aspect, or the second aspect and the possible implementations of the second aspect.

With reference to the ninth aspect, in a possible implementation, the processor is coupled to the memory through an interface.

With reference to the ninth aspect, in a possible implementation, the chip system further includes the memory. The memory stores a computer program or computer instructions.

### BRIEF DESCRIPTION OF DRAWINGS

FIG. 1 is a diagram of a scenario according to an embodiment of this application;
FIG. 2 is a schematic flowchart of a communication method according to an embodiment of this application;
FIG. 3 is a schematic flowchart of a communication method according to an embodiment of this application;
FIG. 4 is a beam grouping manner according to an embodiment of this application;
FIG. 5A to FIG. 5D are diagrams of a spatial domain angle of a beam according to an embodiment of this application;
FIG. 6 is a schematic flowchart of a communication method according to an embodiment of this application;
FIG. 7A and FIG. 7B are diagrams of a spatial domain angle offset between beams/beam groups according to an embodiment of this application;
FIG. 8 is a block diagram of a communication apparatus according to an embodiment of this application;
FIG. 9 is a block diagram of a terminal device according to an embodiment of this application;
FIG. 10 is a block diagram of another communication apparatus according to an embodiment of this application; and
FIG. 11 is a block diagram of a network device according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), or an internet of things (internet of things, IoT) communication system. The technical solutions provided in this application may be further applied to a low frequency scenario, a high frequency scenario, terahertz, optical communication, a licensed (licensed) frequency band, an unlicensed (unlicensed) frequency band, or the like.

A terminal device (for example, user equipment (user equipment, UE)) in embodiments of this application includes various devices having a wireless communication function, and the terminal device may be configured to be connected to a person, an object, a machine, and the like. The terminal device may be widely used in various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehiclemounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multihelicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. It should be understood that in some scenarios, the terminal device may alternatively serve as a base station. For example, the terminal device may serve as a scheduling entity that provides a sidelink signal between terminal devices in a V2X scenario, a D2D scenario, a P2P scenario, or the like.

A network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network. The base station may cover the following various names in a broad sense, or may be replaced with the following names, for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point, a primary station, a secondary station, a multi-standard radio (motor slide retainer, MSR) node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured to serve as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node.

A specific structure of an execution body of a method provided in embodiments of this application is not specifically limited in embodiments of this application provided that a program that records code for the method provided in embodiments of this application can be run to perform communication according to the method provided in embodiments of this application. For example, the method provided in embodiments of this application may be performed by the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information.

A specific structure of an execution body of a method provided in embodiments of this application is not specifically limited in embodiments of this application provided that a program that records code for the method provided in embodiments of this application can be run to perform communication according to the method provided in embodiments of this application. For example, the method provided in embodiments of this application may be performed by the terminal device or the network device, or a functional module that can invoke and execute the program in the terminal device or the network device.

Before the solutions of this application are described, the following descriptions are provided.
(1) In this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are a plurality of manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, protocol-specified), to reduce indication overheads to some extent. In addition, the to-be-indicated information may be sent as a whole, or may be divided into a plurality of pieces of sub-information for separate sending. In addition, sending periodicities and/or sending occasions of these pieces of sub-information may be the same or different.

(2) In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

The following describes technical terms in embodiments of this application.

**Beam (beam):** The beam may be understood as a spatial filter (spatial filter) or a spatial parameter (spatial parameter). A beam used to send a signal may be referred to as a transmission beam (transmission beam, Tx beam), and may be a spatial transmit filter (spatial domain transmit filter) or a spatial transmit parameter (spatial transmit parameter, spatial Tx parameter), or may be a spatial transmit angle (for example, an azimuth (Azimuth) or a zenith (Zenith) angle), a spatial transmit angle range (for example, an azimuth center angle and an offset, an azimuth uncertainty, an azimuth protection range, a zenith center angle and an offset, a zenith angle uncertainty, or a zenith angle protection range), or the like. A beam used to receive a signal may be referred to as a reception beam (reception beam, Rx beam), and may be a spatial receive filter (spatial domain receive filter) or a spatial receive parameter (spatial receive parameter, spatial Rx parameter), or may be a spatial receive angle (for example, an azimuth (Azimuth) or a zenith (Zenith) angle), a spatial receive angle range (for example, an azimuth center angle and an offset, an azimuth uncertainty, an azimuth protection range, a zenith center angle and an offset, a zenith angle uncertainty, or a zenith angle protection range), or the like.

A technology for forming the beam may be a beamforming technology or another technology. For example, the beamforming technology may be specifically a digital beamforming technology, an analog beamforming technology, a hybrid digital/analog beamforming technology, or the like. The transmission beam may refer to signal strength distribution formed in different directions in space after a signal is transmitted through an antenna, and the reception beam may refer to signal strength distribution in different directions in space of a radio signal received from an antenna. The beamforming technology in this application may be implemented based on a power amplifier of a new material, or may be implemented based on a new antenna architecture, for example, a new hybrid phased array and lens antenna technology.

In a 5G-NR protocol, the beam may be a spatial filter (spatial filter). However, it should be understood that this application does not exclude a possibility of defining another term in a future protocol to represent a same or similar meaning.

**Antenna panel (antenna panel)**: where the antenna panel is a panel (panel) for short. Each antenna panel may be configured with one or more reception beams and one or more transmission beams. Therefore, the antenna panel may also be understood as a beam group. A communication device, for example, a terminal device or a network device, may receive a signal by using a reception beam on an antenna panel, or may transmit a signal by using a transmission beam on the antenna panel.

In embodiments of this application, for the terminal device, the panel may be distinguished by using a resource of an uplink reference signal. The uplink reference signal may be a sounding reference signal (sounding reference, SRS). By way of an example but not a limitation, one antenna panel may correspond to one SRS resource set (resource set) identifier (identifier, ID). In other words, one SRS resource set ID may indicate one terminal device panel.

For the network device, the network device may be distinguished by using a panel ID. For example, the panel ID may be indicated by a transmission configuration indicator (transmission configuration indicator, TCI).

**Quasi-co-location (QCL):** where the quasi co-location is also referred to as a quasicolocation. Antenna ports having a QCL relationship experience a same or similar channel parameter, or a channel parameter experienced by one antenna port may be used to determine a channel parameter experienced by another antenna port having a QCL relationship with the antenna port, or a difference between channel parameters experienced by two antenna ports is less than a specific threshold.

The antenna port (antenna port) may also be a port for short, and is a transmit antenna identified by a receive end device, or a transmit antenna that can be distinguished in space. One antenna port may be configured for each virtual antenna, the virtual antenna may be a weighted combination of a plurality of physical antennas, and each antenna port may correspond to one reference signal port.

The channel parameter may include one or more of the following: a delay spread (delay spread), a Doppler spread (Doppler spread), a Doppler shift (Doppler shift), an average delay (average delay), an average gain, and a spatial receive parameter. The spatial receive parameter may include, for example, an angle of arrival (angle of arrival, AOA), an average AOA, an AOA spread, an angle of departure (angle of departure, AOD), an average angle of departure AOD, an AOD spread, a receive antenna spatial correlation parameter, a transmit antenna spatial correlation parameter, a transmission beam, a reception beam, and a resource identifier.

The angle may be a decomposition value in different dimensions, or a combination of decomposition values in different dimensions. The antenna ports are antenna ports having different antenna port numbers, antenna ports that have a same antenna port number and that are used to send or receive information at different time, on different frequencies, and/or on different code domain resources, and/or antenna ports that have different antenna port numbers and that are used to send or receive information at different time, on different frequencies, and/or on different code domain resources. The resource identifier may indicate an identifier on a resource. The resource identifier may include, for example, a CSI-RS resource identifier, an SRS resource identifier, a synchronization signal/synchronization signal block resource identifier, a resource identifier of a preamble sequence transmitted on a physical random access channel (physical random access channel, PRACH), or a demodulation reference signal (demodulation reference signal, DMRS) resource identifier.

In the 5G-NR protocol, the QCL relationship may be classified into the following four types based on different parameters:
type A (type A): a Doppler shift, a Doppler spread, an average delay, and a delay spread;
type B (type B): a Doppler shift and a Doppler spread;
type C (type C): a Doppler shift and an average delay; and
type D (type D): a spatial receive parameter.

The QCL in embodiments of this application is a QCL relationship of the type D. Unless otherwise specified below, the QCL may be understood as the QCL of the type D, namely, QCL defined based on the spatial receive parameter. However, it should be understood that this application does not exclude a possibility of defining another term in a future protocol to represent a same or similar meaning.

When a QCL relationship is a QCL relationship of the type D, a QCL relationship between ports for downlink signals or between ports for uplink signals may be that the two signals have a same AOA or AOD, and indicates that the two signals have a same reception beam or transmission beam. For another example, a QCL relationship between a downlink signal and an uplink signal or between a port for the uplink signal and a port for the downlink signal may be that there is a correspondence between AOAs and AODs of the two signals or that there is a correspondence between the AODs and the AOAs of the two signals. That is, beam reciprocity may be for determining an uplink transmission beam based on a downlink reception beam or determining the downlink reception beam based on the uplink transmission beam.

Signals transmitted on ports having a spatial domain QCL relationship may further have corresponding beams. The corresponding beam includes at least one of the following: a same or similar reception beam, a same or similar transmission beam, a transmission beam corresponding to a reception beam (corresponding to a beam reciprocity scenario), and a reception beam corresponding to a transmission beam (corresponding to a beam reciprocity scenario).

Signals transmitted on ports having a spatial domain QCL relationship may alternatively be understood as signals received or sent by using a same spatial filter (spatial filter). The spatial filter may be at least one of the following: precoding, a weighted value of an antenna port, a phase deflection of the antenna port, and an amplitude gain of the antenna port.

Signals transmitted on ports having a spatial domain QCL relationship may alternatively be understood as having corresponding beam pair links (beam pair links, BPL). The corresponding BPL include at least one of the following: a same downlink BPL, a same uplink BPL, an uplink BPL corresponding to a downlink BPL, or a downlink BPL corresponding to an uplink BPL.

Therefore, the spatial receive parameter (namely, the QCL of the type D) may be understood as a parameter indicating direction information of the reception beam and/or the transmission beam.

**Beam pairing relationship (beam pair link, BPL):** where the beam pairing relationship is a pairing relationship between a transmission beam and a reception beam, and may also be referred to as a pairing relationship between a spatial transmit filter and a spatial receive filter. A large beamforming gain can be obtained through transmission of a signal between a transmission beam and a reception beam that have a beam pairing relationship.

In an implementation, a transmit end may transmit a reference signal through beam sweeping, and a receive end may also receive a reference signal through beam sweeping. Specifically, the transmit end may form different directional beams in space in a beamforming manner, and may perform polling on a plurality of different directional beams, to transmit a reference signal by using different directional beams, so that a power for transmitting the reference signal can reach a maximum value in a direction of a transmission beam. The receive end may also form, in a beamforming manner, different reception beams corresponding to different spatial directions and directivities, and may perform polling on a plurality of different directional beams, to receive a reference signal by using different directional beams, so that a power for receiving the reference signal by the receive end can reach a maximum value in a direction of a reception beam.

By traversing each transmission beam and each reception beam, the receive end may perform channel measurement based on the received reference signal, and report a measurement result to the transmit end. For example, the receive end may report a reference signal resource with a large reference signal received power (reference signal received power, RSRP) to the transmit end, for example, report an identifier of the reference signal resource, so that the transmit end transmits and receives a signal by using a beam pairing relationship with good channel quality during data or signaling transmission.

**Reference signal and reference signal resource (RS, RS resource):** where the reference signal may be used for channel measurement, channel estimation, beam quality monitoring, or the like. The reference signal resource may be used to configure transmission attributes of the reference signal, for example, a time-frequency resource position, a port mapping relationship, a power factor, and a scrambling code. For details, refer to a conventional technology. A transmit end device may send the reference signal based on the reference signal resource, and a receive end device may receive the reference signal based on the reference signal resource.

The reference signal in embodiments of this application may include, for example, a channel state information reference signal (channel state information reference signal, CSI-RS), a synchronization signal block (synchronization signal block, SSB), and a sounding reference signal (SRS). Correspondingly, the reference signal resource may include a CSI-RS resource (CSI-RS resource), an SSB resource, and an SRS resource (SRS resource).

To distinguish between different reference signal resources, each reference signal resource may correspond to an identifier of one reference signal resource, for example, a CSI-RS resource identifier (CSI-RS resource indicator, CRI), an SSB resource identifier (SSB resource indicator, SSBRI), or an SRS resource index (SRS resource index, SRI).

It should be noted that the foregoing SSB resource may also be understood as a synchronization signal/physical broadcast channel block (synchronization signal/physical broadcast channel block, SS/PBCH block) resource. In embodiments of this application, for ease of distinguishing and description, unless otherwise specified, the SSB resource and the SS/PBCH block resource may indicate a same meaning, and the SSB resource and the SS/PBCH block resource may indicate a same meaning. In addition, in some cases, the SSB may also be an SSB resource. Therefore, the SSB resource identifier may also be referred to as an SSB identifier (SSB index) sometimes.

It should be understood that the reference signal and the corresponding reference signal resource listed above are merely examples for description, and should not constitute any limitation on this application. This application does not exclude a possibility of defining another reference signal in a future protocol to implement a same or similar function.

In configuration signaling of the reference signal resource, different time domain behavior (time domain behavior) parameters may indicate different time domain behaviors. By way of an example but not a limitation, the time domain behavior may include, for example, a periodic (periodic) behavior, a semi-persistent (semi-persistent, SP) behavior, and an aperiodic (aperiodic, AP) behavior.

For example, based on different time domain behaviors, the CSI-RS may include a periodic CSI-RS, an aperiodic CSI-RS, and a semi-persistent CSI-RS. Based on different time domain behaviors, the SRS may also include a periodic SRS, an aperiodic SRS, and a semi-persistent SRS.

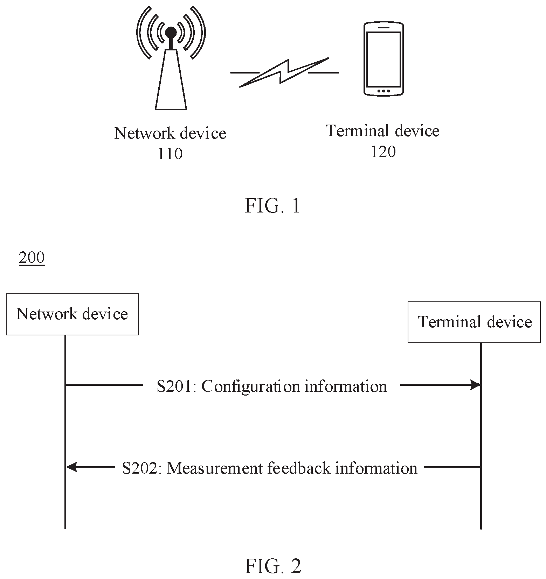

FIG. 1 is a diagram of an application scenario to which a method according to an embodiment of this application is applicable. It should be understood that a scenario in which the method in this embodiment of this application may be used may include more or fewer apparatuses or devices, or may include apparatuses or devices having a similar function. The scenario shown in FIG. 1 includes a network device 110 and a terminal device 120, and may include one or more network devices and one or more terminal devices. The network device and the terminal device each may have a high-frequency communication capability and a low-frequency communication capability. It should be noted that, in the communication method provided in this embodiment of this application, a single network device and a single terminal device may be used as an example. The network device may transmit data or control signaling to the terminal device.

Beam alignment between the terminal device and the network device may be implemented through information exchange between the terminal device and the network device. The terminal device may perform beam measurement based on a reference signal (for example, a synchronization signal block (synchronization signal block, SSB) or a channel state information reference signal (channel state information reference signal, CSI-RS)) sent by the network device, and report a reference signal number and beam quality information (for example, a reference signal received power (reference signal received power, RSRP) or a signal-to-interference-plus-noise ratio (signal-to-interference-plus-noise ratio, SINR)) corresponding to one or more beams. The network device may indicate, to the terminal device, a reference signal resource number corresponding to a serving beam and/or a QCL relationship between the reference signal resource number corresponding to the serving beam and a reference signal resource number corresponding to a measurement beam, for subsequent data transmission. To ensure a beam alignment state between the network device and the terminal device, information exchange between the terminal device and the network device is usually continuously performed.

In addition, a current wireless communication system introduces a spectrum resource with a higher frequency, for example, a millimeter wave or a terahertz frequency band, to meet an increasing communication requirement. Usually, on a high frequency band, a path loss experienced by a radio signal is large, affecting a coverage distance of the radio signal. In the millimeter wave and on the terahertz frequency band, a beamforming technology may be used to aggregate signal energy to a specific angle range, to improve the coverage distance of the radio signal.

As a service requirement increases and a communication capability of the network device is improved, a network device in a next-generation wireless communication system (for example, a 6th generation mobile communication technology) may support parallel transmission of a plurality of beams. Concurrent transmission of the plurality of beams can reduce a delay and overheads in a beam measurement process, thereby improving spectral efficiency.

In view of the foregoing problem, embodiments of this application provide a communication method and a communication apparatus. A network device may notify a terminal device of grouping information and beam group characteristic information of concurrent beams, so that the terminal device measures the beams, thereby reducing a delay and overheads in a scenario in which the network device transmits a plurality of concurrent beams, and improving spectral efficiency. It may be understood that in some scenarios, for example, in a device-to-device (device-to-device, D2D) communication scenario, a first terminal device may notify a second terminal device of grouping information and beam group characteristic information of concurrent beams, so that the terminal device measures the beams, thereby reducing a delay and overheads in a scenario in which the terminal device transmits a plurality of concurrent beams, and improving spectral efficiency.

With reference to the accompanying drawings, the following describes how the communication method and the communication apparatus provided in embodiments of this application group candidate beams, and indicate a grouping rule and/or a characteristic, and a concurrency relationship or a spatial domain angle relationship in a beam group and between beam groups, thereby reducing a delay and overheads in a beam measurement process, and improving spectral efficiency.

FIG. 2 is a schematic flowchart of a communication method according to an embodiment of this application. The method shown in FIG. 2 may be applied to the communication system shown in FIG. 1, and the method 200 includes the following steps.

S201: A network device sends configuration information, and correspondingly a terminal device receives the configuration information.

It should be noted that the network device may transmit the configuration information by using radio resource control (radio resource control, RRC) signaling or a system message (for example, a master information block (master information block, MIB) or a system information block (system information block, SIB)).

In an implementation, the configuration information includes first information.

It should be noted that the first information indicates a group identifier (identifier, ID) of at least one beam group and an ID of a beam. The beam belongs to the at least one beam group, the beam may be understood as a beam included in the beam group, and the beam group and the beam may be understood as a candidate beam group and a candidate beam that are configured by the network device for the terminal device. The terminal device measures the candidate beam group and/or the candidate beam configured by the network device, to select a target beam group and/or a target beam.

For example, the first information may be concurrent beam grouping information. For example, the first information indicates a beam group 1, and a beam 0, a beam 1, a beam 2, and a beam 3 that are included in the beam group 1.

In an implementation, the configuration information includes the first information and second information.

It should be noted that the second information indicates a beam group characteristic.

For example, the beam group characteristic includes at least one of the following: an intra-group concurrent beam transmission characteristic or an intra-group beam spatial isolation characteristic; and the intra-group concurrent beam transmission characteristic indicates concurrent beam transmission in the target beam group, and the intra-group beam spatial isolation characteristic indicates that beam spatial isolation in the target beam group is greater than or equal to a first isolation threshold.

For example, spatial isolation between beams may be measured by using a difference between beam center angles (namely, a difference between a beam center angle of the beam 1 and a beam center angle of the beam 2). For example, when the beam spatial isolation in the group is greater than or equal to the first isolation threshold, it may be considered that the beam spatial isolation in the group is high. The first isolation threshold is a difference of 20 degrees between the beam center angles. It should be understood that the difference of 20 degrees between the beam center angles is merely an example for description. A specific value of the first isolation threshold is not limited in this embodiment of this application. Different values of the first isolation threshold may be preset based on actual situations. Certainly, that the spatial isolation between the beams is measured by using the difference between the beam center angles is also an example for description. Alternatively, the spatial isolation between the beams may be measured by using a difference between beam peak angles (namely, a difference between a maximum gain angle of the beam 1 and a maximum gain angle of the beam 2). This is not limited in this embodiment of this application.

Optionally, whether spatial domain angles between the beams are close may be measured by using the difference between the beam center angles or the difference between the peak angles. For example, when the difference between the beam center angles or the difference between the peak angles is less than the first isolation threshold, it may be considered that the spatial domain angles between the beams are close. Alternatively, whether spatial domain angles between the beams are close may be measured by using whether half-power beam widths (half-power beam widths, HPBW) of the beams overlap. For example, when the HPBWs of the beams overlap, it may be considered that the spatial domain angles between the beams are close. It should be noted that whether the spatial domain angles between the beams are close is measured by using the difference between the beam center angles or the difference between the peak angles and whether the HPBWs of the beams overlap is merely an example for description. A specific manner of determining whether the spatial domain angles are close is not limited in this embodiment of this application.

It should be noted that concurrent transmission may be understood as simultaneous transmission, parallel transmission, or the like. In a same time domain unit, transmitting a plurality of beams may be understood as concurrent transmission. For example, at least two beams are transmitted on a symbol (symbol) or in a mini-slot (mini-slot), a slot (slot), a subframe (subframe), a half-frame (half-frame), or a frame (Frame).

It should be understood that before sending the configuration information, the network device determines the first information, or determines the first information and the second information. The network device may transmit the second information to the terminal device by using the RRC signaling or the system message, or may predefine the beam group characteristic for the terminal device.

In an implementation, the configuration information includes the first information and beam spatial domain angle information, or the configuration information includes the first information, the second information, and the beam spatial domain angle information.

It should be understood that the beam spatial domain angle information is used to determine a spatial domain angle of the beam, and the spatial domain angle of the beam includes a zenith angle of the beam and/or an azimuth of the beam.

In other words, the terminal device determines the spatial domain angle of the beam based on the beam spatial domain angle information.

In an implementation, the beam spatial domain angle information includes an ID of a first reference beam and beam spatial domain angle information of the first reference beam.

Optionally, the beam spatial domain angle information includes a first intra-group beam angle offset rule, the first intra-group beam angle offset rule is used to determine a spatial domain angle of a beam other than the first reference beam in a first beam group, and the first beam group belongs to the at least one beam group.

In other words, the terminal device determines, according to the first intra-group beam angle offset rule and based on the ID of the first reference beam and the beam spatial domain angle information of the first reference beam, the spatial domain angle of the beam in the first beam group other than the first reference beam.

It should be noted that in the following method 600, specific descriptions of an intra-group beam angle offset are recorded. Details are not described herein again.

For example, the network device configures the at least one beam group (including the first beam group) for the terminal device, and configures an ID of a beam 0 in the first beam group, and an azimuth and/or a zenith angle of the beam 0 for the terminal device. The beam 0 is a reference beam (the first reference beam) in the first beam group, and the first beam group further includes a beam 1, a beam 2, and a beam 3. The terminal device may obtain, through calculation, azimuths and/or zenith angles of the beam 1, the beam 2, and the beam 3 in the first beam group according to the first intra-group beam angle offset rule and based on the ID of the beam 0, and the azimuth and/or the zenith angle of the beam 0.

In an implementation, the beam spatial domain angle information includes an ID of a second reference beam and beam spatial domain angle information of the second reference beam.

Optionally, the first intra-group beam angle offset rule is further used to determine a spatial domain angle of a beam other than the second reference beam in a second beam group, and the second beam group belongs to the at least one beam group.

In other words, the terminal device determines, according to the first intra-group beam angle offset rule and based on the ID of the second reference beam and the beam spatial domain angle information of the second reference beam, the spatial domain angle of the beam in the second beam group other than the second reference beam.

For example, the network device configures the at least one beam group (including the second beam group) for the terminal device, and configures an ID of a beam 4 in the second beam group, and an azimuth and/or a zenith angle of the beam 4 for the terminal device. The beam 4 is a reference beam (the second reference beam) in the second beam group, and the second beam group further includes a beam 5, a beam 6, and a beam 7. The terminal device may obtain, through calculation, azimuths and/or zenith angles of the beam 5, the beam 6, and the beam 7 in the second beam group according to the first intra-group beam angle offset rule and based on the ID of the beam 4, and the azimuth and/or the zenith angle of the beam 4.

It should be understood that the ID of the first reference beam may be different from the ID of the second reference beam.

In other words, the first intra-group beam angle offset rule configured by the network device for the terminal device is common. The terminal device may determine, according to the common intra-group beam angle offset rule, a spatial domain angle of each beam in each of the at least one beam group configured by the network device.

Optionally, the beam spatial domain angle information includes a second intra-group beam angle offset rule, the second intra-group beam angle offset rule is used to determine a spatial domain angle of a beam other than the second reference beam in a second beam group, and the second beam group belongs to the at least one beam group.

In other words, the terminal device determines, according to the second intra-group beam angle offset rule and based on the ID of the second reference beam and the beam spatial domain angle information of the second reference beam, the spatial domain angle of the beam in the second beam group other than the second reference beam.

For example, the network device configures the at least one beam group (including the second beam group) for the terminal device, and configures an ID of a beam 4 in the second beam group, and an azimuth and/or a zenith angle of the beam 4 for the terminal device. The beam 4 is a reference beam (the second reference beam) in the second beam group, and the second beam group further includes a beam 5, a beam 6, and a beam 7. The terminal device may obtain, through calculation, azimuths and/or zenith angles of the beam 5, the beam 6, and the beam 7 in the second beam group according to the second intra-group beam angle offset rule and based on the ID of the beam 4, and the azimuth and/or the zenith angle of the beam 4.

In other words, the network device may configure different intra-group beam angle offset rules for the terminal device based on different beam groups. For example, the second intra-group beam angle offset rule is different from the first intra-group beam angle offset rule. The terminal device separately determines spatial domain angles of beams in different beam groups according to specific intra-group beam angle offset rules.

In an implementation, the beam spatial domain angle information includes a group ID of a reference beam group and beam spatial domain angle information of the reference beam group, the spatial domain angle of the beam is a spatial domain angle of a beam group other than the reference beam group, and the reference beam group belongs to the at least one beam group.

Optionally, the beam spatial domain angle information includes an inter-group beam angle offset rule.

In other words, the terminal device determines, according to the inter-group beam angle offset rule and based on the group ID of the reference beam group and the beam spatial domain angle information of the reference beam group, the spatial domain angle of the beam group other than the reference beam group.

It should be noted that in the following method 600, specific descriptions of an intra-group beam angle offset are recorded. Details are not described herein again.

For example, the network device configures the first beam group and the second beam group for the terminal device. The first beam group is a reference beam group. The terminal device may obtain, through calculation, beam spatial domain angle information of the second beam group according to the inter-group beam angle offset rule and based on the ID of the first beam group and beam spatial domain angle information of the first beam group.

It should be understood that the inter-group beam angle offset rule may be common or may be specific. For example, the network device may configure one reference beam group for a plurality of candidate beam groups, and configure a common inter-group beam angle offset rule for the terminal device, so that the terminal device determines spatial domain angle information of a beam group other than the reference beam group according to the common inter-group beam angle offset rule. Similarly, the network device may configure different inter-group beam angle offset rules for the terminal device based on different candidate beam groups, so that the terminal device separately determines spatial domain angle information of different beam groups according to specific inter-group beam angle offset rules.

Optionally, the beam angle information includes a fine offset and/or uncertainty information, and the fine offset and/or the uncertainty information are/is used to determine an angle jitter and a deviation of the beam.

For example, the fine offset is more refined than the spatial domain angle information. A width of the zenith angle and a width of the azimuth are measured in degrees, and the fine offset is measured in 0.1 degree. The uncertainty information may be a maximum error of an angle, a width, or a fine offset. For example, if the network device indicates, to the terminal device, that a width of a specific beam is x degrees, and the uncertainty information indicates that a maximum error of the width is y degrees, the width of the beam is within a range of [x-y, x+y].

S202: The terminal device sends measurement feedback information, and correspondingly the network device receives the measurement feedback information.

It should be noted that the measurement feedback information includes a group ID of a target beam group, and the target beam group belongs to the at least one beam group.

In other words, the terminal device selects the target beam group from the at least one beam group based on the configuration information, and feeds back the group ID of the target beam group to the network device.

In an implementation, the measurement feedback information includes an ID and/or beam quality information of a target beam, and the target beam is one or more beams in the target beam group.

In other words, before sending the measurement feedback information to the network device based on the configuration information, the terminal device determines the ID of the target beam group, the ID of the target beam, and the beam quality information based on the configuration information.

It should be understood that the target beam may be a serving beam or an interference beam in the target beam group.

For example, the beam quality information includes one or more of the following: channel state information (channel state information, CSI), a signal-to-interference-plus-noise ratio (signal-to-interference-plus-noise ratio, SINR), or a reference signal received power (reference signal received power, RSRP).

It should be noted that specific content of the beam quality information is related to a measurement target.

In an implementation, when the measurement target is single-user multi-beam transmission, the beam quality information is the CSI, and the CSI includes one of the following: a precoding indicator (precoding matrix indicator, PMI), a rank indicator (rank indicator, RI), or a channel quality indicator (channel quality indicator, CQI).

In other words, when the measurement target is the single-user multi-beam transmission, the terminal device determines the group ID of the target beam group, the ID of the target beam, and the CSI based on the configuration information.

In an implementation, when the measurement target is multi-user pairing, the beam quality information is the SINR.

In other words, when the measurement target is the multi-user pairing, the terminal device determines the ID of the target beam group, the ID of the target beam, and the SINR based on the configuration information.

It should be noted that the ID of the target beam indicates one of the following: an ID of a serving beam or an ID of an interference beam; and the serving beam and the interference beam belong to the target beam group, and the interference beam is a beam in the target beam group other than the serving beam.

Based on the foregoing solution, the terminal device may perform beam measurement by using the configuration information from the network device, to select the target beam group from the candidate beam groups, and report the target beam group to the network device. This reduces overheads and a delay when the terminal device performs beam measurement, enhances a purpose of beam selection and reporting by the terminal device, and increases an opportunity of concurrent beam transmission by the network device.

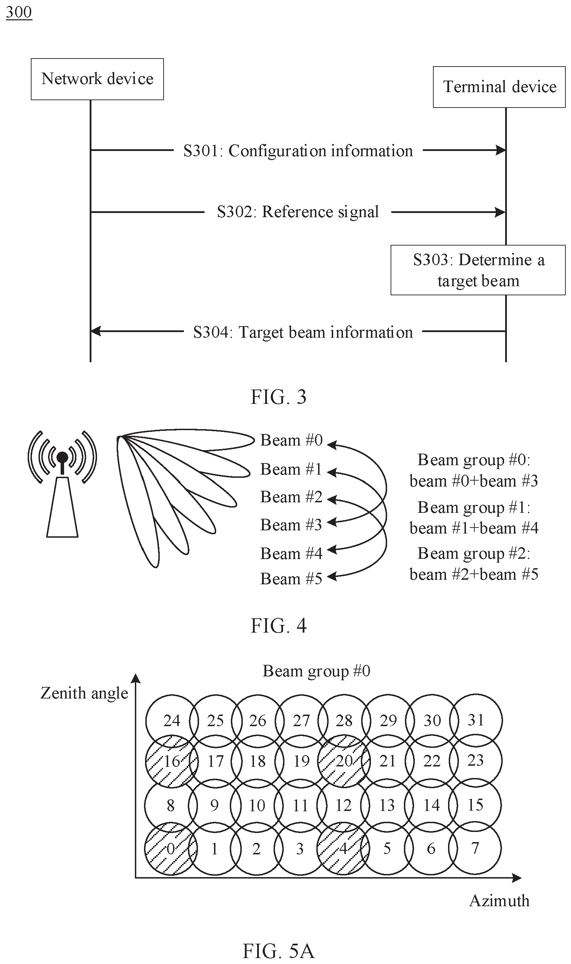

FIG. 3 is a schematic flowchart of a communication method according to an embodiment of this application. The method shown in FIG. 3 may be applied to the communication system shown in FIG. 1. A network device may send configuration information to a terminal device, to improve beam measurement efficiency of the terminal device, and increase an opportunity of concurrent beam transmission by the network device. The network device in this embodiment of this application supports multi-beam concurrent transmission. The following describes the method 300 in detail.

S301: The network device sends the configuration information, and correspondingly the terminal device receives the configuration information.

It should be noted that the network device may transmit the configuration information by using RRC signaling or a system message (for example, a MIB or a SIB).

It should be understood that before sending the configuration information, the network device determines concurrent beam grouping information, or determines the concurrent beam grouping information and a concurrent beam grouping characteristic.

Correspondingly, the configuration information includes the concurrent beam grouping information, or the configuration information includes the concurrent beam grouping information and the concurrent beam grouping characteristic.

It should be noted that the network device may transmit the concurrent beam grouping characteristic to the terminal device by using the RRC signaling or the system message, or may predefine the concurrent beam grouping characteristic for the terminal device.

For example, before sending the configuration information, the network device may group a plurality of beams. For example, FIG. 4 shows a beam grouping manner. The network device has M candidate beams, and supports N concurrent beams, where M and N are positive integers, and M is greater than or equal to N. In FIG. 4, when a value of M is 6, and a value of N is 2, it indicates that the network device has six candidate beams (including a beam #0, a beam #1, a beam #2, a beam #3, a beam #4, and a beam #5), and the network device supports two concurrent beams. The foregoing six candidate beams may be grouped into three beam groups, and each beam group includes two concurrent beams. For example, a beam group #0 includes the beam #0 and the beam #3, a beam group #1 includes the beam #1 and the beam #4, and a beam group #2 includes the beam #2 and the beam #5. The network device may indicate corresponding configuration information to the terminal device based on the grouping of the plurality of candidate beams, to improve beam measurement efficiency of the terminal device.

It should be understood that the concurrent beam grouping information indicates a beam identifier (identifier, ID) and/or a beam group ID. For example, FIG. 5A to FIG. 5D are diagrams of a spatial domain angle of a beam. A shadow part represents a beam included in a specific beam group, a horizontal coordinate represents an azimuth, a vertical coordinate represents a zenith angle, and the azimuth and the zenith angle represent the spatial domain angle of the beam. At least one of zenith (Zenith) angles and azimuths (Azimuths) of different beams may be different.

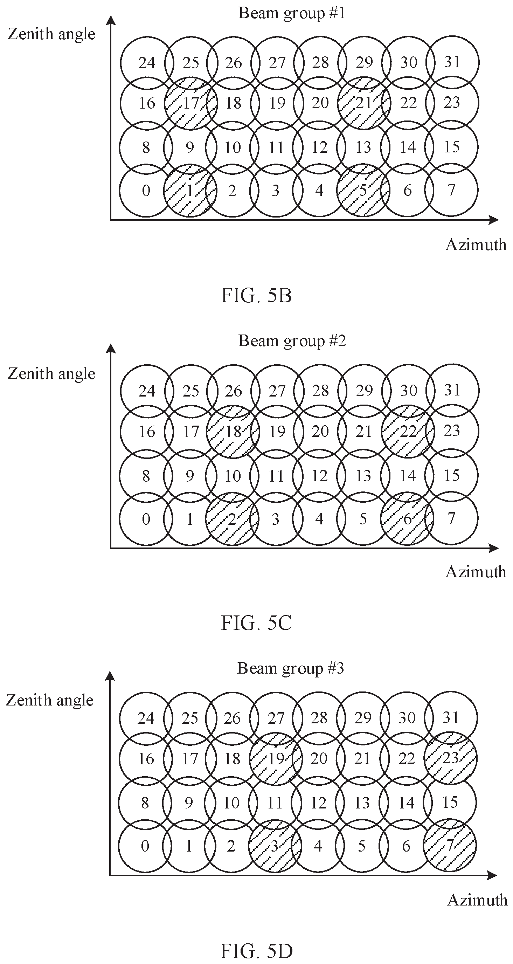

FIG. 5A shows a beam group #0, and the beam group #0 may include a beam 0, a beam 4, a beam 16, and a beam 20. Spatial domain angles of the foregoing four beams in the beam group #0 are different. Similarly, FIG. 5B shows a beam group #1, and the beam group #1 may include a beam 1, a beam 5, a beam 17, and a beam 21. Spatial domain angles of the foregoing four beams in the beam group #1 are different. FIG. 5C shows a beam group #2, and the beam group #2 may include a beam 2, a beam 6, a beam 18, and a beam 22. Spatial domain angles of the foregoing four beams in the beam group #1 are different. FIG. 5D shows a beam group #3, and the beam group #3 may include a beam 3, a beam 7, a beam 19, and a beam 23. Spatial domain angles of the foregoing four beams in the beam group #3 are different. It may be learned that spatial domain angles of different beam groups are different.

For example, the concurrent beam grouping information indicates a beam group ID, and indicates an ID of a beam included in the beam group. For example, the concurrent beam grouping information includes a beam group (Beam Group) #0: {0, 4, 16, 20}, indicating the beam group #0, where the beam group #0 includes four concurrent beams: the beam 0, the beam 4, the beam 16, and the beam 20 respectively; a Beam Group #1: {1, 5, 17, 21}, indicating the beam group #1, where the beam group #1 includes four concurrent beams: the beam 1, the beam 5, the beam 17, and the beam 21 respectively; a Beam Group #2: {2, 6, 18, 22}, where the beam group #2 includes four concurrent beams: the beam 2, the beam 6, the beam 18, and the beam 22 respectively; and a Beam Group #3: {3, 7, 19, 23}, where the beam group #3 includes four concurrent beams: the beam 3, the beam 7, the beam 19, and the beam 23 respectively.

It should be noted that the terminal device may determine the beam group and the concurrent beams in the beam group based on the concurrent beam grouping information from the network device.

It should be understood that the beam ID (for example, the beam 0 or the beam 1) may also be replaced with a reference signal (reference signal, RS) ID or a transmission configuration indicator (transmission configuration indicator, TCL) state ID.

It should be noted that one or more transmission beams and one or more reception beams may be configured for each antenna panel. The antenna panel may also be understood as a beam group. The terminal device and the network device in this embodiment of this application may receive a signal by using the reception beam on the antenna panel, or may transmit a signal by using the transmission beam on the antenna panel. For the terminal device, the antenna panel may be distinguished based on a resource of an uplink reference signal. The uplink reference signal may be a sounding reference signal (sounding reference, SRS). For example, one antenna panel may correspond to one SRS resource set identifier (resource set identifier, RS ID). It may be learned that an RS ID of one SRS may indicate one terminal device panel, in other words, an RS ID of one SRS may indicate a beam. For the network device, the antenna panel may be distinguished by using a panel ID. For example, the panel ID may be indicated by using a transmission configuration indicator (transmission configuration indicator, TCI), in other words, a TCL state ID may indicate a beam.

It should be understood that the concurrent beam grouping characteristic may include at least one of the following characteristics: a transmission characteristic or a spatial isolation characteristic. The transmission characteristic indicates that one or more beams in a same beam group may be simultaneously transmitted, in other words, the one or more beams in the same beam group are concurrent beams; and a quantity of concurrent beams is a positive integer greater than or equal to 2. For example, as shown in FIG. 5A, the beam 0, the beam 4, the beam 16, and the beam 20 included in the beam group #0 are concurrent beams. The spatial isolation characteristic indicates that a distance between spatial domain angles of a plurality of beams in a same beam group is long. For example, as shown in FIG. 5A, spatial isolation of the beam 0, the beam 4, the beam 16, and the beam 20 included in the beam group #0 is high.

For example, spatial isolation between beams may be measured by using a difference between beam center angles. For example, when the beam spatial isolation in the group is greater than or equal to a first isolation threshold, it may be considered that the beam spatial isolation in the group is high. The first isolation threshold is a difference of 20 degrees between the beam center angles. It should be understood that the difference of 20 degrees between the beam center angles is merely an example for description. A specific value of the first isolation threshold is not limited in this embodiment of this application. Different values of the first isolation threshold may be preset based on actual situations. Certainly, that the spatial isolation between the beams is measured by using the difference between the beam center angles is also an example for description. Alternatively, the spatial isolation between the beams may be measured by using a difference between beam peak angles. Alternatively, the spatial isolation between the beams may be measured by using a difference between gains of a serving beam and an interference beam at a same angle (for example, an angle at which the terminal device is located). This is not limited in this embodiment of this application.

It should be noted that the network device notifies the terminal device of the concurrent beam grouping information and/or the concurrent beam grouping characteristic, to assist the terminal device in beam selection. For example, the terminal device selects and/or reports a plurality of beams in a same beam group, thereby improving a data throughput and multi-beam transmission robustness.

S302: The network device sends a reference signal, and correspondingly the terminal device receives the reference signal.

It should be understood that the reference signal may also be referred to as a pilot or a pilot sequence, and may be used for channel estimation in the communication system.

It should be noted that a specific manner of time-frequency multiplexing, frequency division multiplexing, or code division multiplexing of the reference signal for beam measurement is not limited.

S303: The terminal device determines a target beam.

It should be understood that the terminal device may perform beam selection based on the concurrent beam grouping information, or based on the concurrent beam grouping information and the concurrent beam grouping characteristic.

It should be noted that the terminal device may perform beam selection based on a configuration of the network device or a beam measurement target autonomously selected by the terminal device, and determine corresponding beam quality based on the selected beam.

For example, if the beam measurement target configured by the network device or autonomously selected by the terminal device is single-user (single-user, SU) multi-beam transmission (or a higher capacity), the terminal device may select a plurality of beams in a same beam group, and calculate CSI for multi-beam joint transmission. The CSI obtained through calculation indicates beam quality of the plurality of beams selected by the terminal device. The CSI may include a PMI, an RI, or a CQI. The terminal device may notify the network device of an optimal precoding matrix by using the PMI, the terminal device may notify the network device of an optimal quantity of layers for transmission by using the RI, and the terminal device may notify the network device of a highest available modulation and coding scheme.

For example, if the beam measurement target configured by the network device or autonomously selected by the terminal device is multi-user (multi-user, MU) multi-beam pairing, the terminal device may select one beam in a same beam group, use the beam as a serving beam, use another beam in the same beam group as an interference beam, and obtain an SINR through calculation. The SINR indicates beam quality of the beam selected by the terminal device.

S304: The terminal device sends target beam information, and correspondingly the network device receives the target beam information.

For example, the target beam information may include beam identification information and beam quality information.

It should be understood that the beam identification information may include an identifier of a target beam group and an identifier of a beam in the target beam group. The beam quality information may include channel state information or beam interference information. A number of the beam in the target beam group includes an identifier of a target beam or an identifier of an interference beam.

For example, if the measurement beam target is SU multi-beam transmission (or a higher capacity), the terminal device reports the target beam information to the network device. The target beam information includes the identifier of the target beam group, the identifier of the target beam, and the channel state information.

For example, the terminal device measures and selects the beam 1 and the beam 5 in the beam group #1 shown in FIG. 5B. The identifier of the target beam group is the Beam Group #1, the identifier of the target beam is a Local Beam #{0, 1}, and the beam quality information is the channel state information (including the PMI, the RI, or the CQI). The Local Beam #{0, 1} corresponds to a first beam and a second beam shown in FIG. 5B, namely, a Global Beam #{1, 5}. It may be understood that the Local Beam indicates an identifier of a beam in a specific beam group, and the Global Beam indicates an identifier of a beam in all beams in a global range. As shown in FIG. 5B, the Local Beam indicates an identifier of a beam in the beam group #1, and the Global Beam indicates and an identifier of a beam in all beams (for example, the beam 0, the beam 1, ..., and a beam 31) in a global range. All the beams in the global range may be understood as candidate beams of the network device.

For example, if the measurement beam target is MU multi-beam pairing, the terminal device may report the target beam information to the network device. The target beam information includes the identifier of the target beam group, the identifier of the target beam, and the beam interference information.

For example, the terminal device measures and selects the beam 1 in the beam group #1 shown in FIG. 5B. The identifier of the target beam group is the Beam Group #1, the identifier of the target beam is a Local Beam #0, and the beam quality information is the beam interference information (the SINR). The Local Beam #0 corresponds to a first beam shown in FIG. 5B, namely, the Global Beam #1, and the beam interference information is that the Global Beam #1 is used as a serving signal, and Global Beams #5, and 17, and 21 are used as SINRs of interference signals.

For example, if the measurement beam target is MU multi-beam pairing, the terminal device may report the target beam information to the network device. The target beam information includes the identifier of the target beam group, the identifier of the interference beam, and the beam interference information.

For example, the terminal device measures and selects the beam 1 in the beam group #1 shown in FIG. 5B. The identifier of the target beam group is the Beam Group #1, the identifier of the interference beam is a Local Beam #{1, 2}, and the beam quality information is the beam interference information (the SINR). The Local Beam #{1, 2} corresponds to a second beam and a third beam shown in FIG. 5B, namely, a Global Beam #{5, 17}, and the beam interference information is that the Global Beam #1 is used as a serving signal, and Global Beams #5 and #17 are used as SINRs of interference signals.

Based on the foregoing solution, the network device at least configures, for the terminal device, the configuration information including the concurrent beam grouping information, so that the terminal device learns that the network device has a concurrent beam transmission capability, and the terminal device measures the beam, thereby reducing overheads of reporting the target beam information by the terminal device, and increasing an opportunity of concurrent beam transmission by the network device.

In the method 300, the terminal device performs beam measurement by using the configuration information from the network device. The concurrent beam grouping characteristic included in the configuration information indicates transmission and a spatial isolation characteristic of the beam in the beam group. The terminal device may determine approximate spatial angle information of a plurality of beams in the beam group (for example, high spatial isolation or low spatial isolation of the plurality of beams in the beam group) by using the concurrent beam grouping characteristic. Therefore, according to the communication method provided in this embodiment of this application, the terminal device can more clearly determine the spatial domain angle information of the beam, thereby enhancing a purpose of measuring the beam and reporting the target beam information by the terminal device.

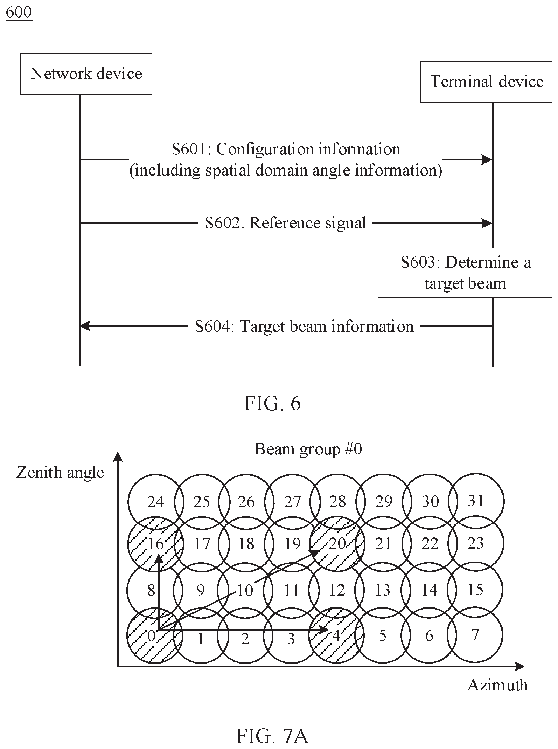

FIG. 6 is a schematic flowchart of a communication method according to an embodiment of this application. The method shown in FIG. 6 may be applied to the communication system shown in FIG. 1. A network device may send spatial domain angle information of a beam to a terminal device, to reduce overheads of indicating, by the network device, the spatial domain angle information to the terminal device, enhance a purpose of measuring the beam and reporting target beam information by the terminal device, and increase an opportunity of concurrent beam transmission by the network device. The network device in this embodiment of this application supports multi-beam concurrent transmission. The following describes the method 600 in detail.

S601: The network device sends configuration information, and correspondingly the terminal device receives the configuration information.

It should be noted that the network device may transmit the configuration information by using RRC signaling or a system message (for example, a MIB or a SIB).

It should be understood that the configuration information may include the spatial domain angle information, and the spatial domain angle information indicates a spatial domain angle (for example, an azimuth and a zenith angle) of the beam.

It should be noted that based on the foregoing descriptions in S301, the configuration information includes concurrent beam grouping information or includes a concurrent beam grouping characteristic. In the method 600, the configuration information may further include the spatial domain angle information, so that the terminal device can determine a spatial domain angle of each beam based on the spatial domain angle information.

It should be understood that the network device may configure the spatial domain angle information for the terminal device by using the configuration information, or may predefine the spatial domain angle information for the terminal device.

In an implementation, the spatial domain angle information includes a reference beam, spatial domain angle information of the reference beam, and an intra-group beam angle offset rule.

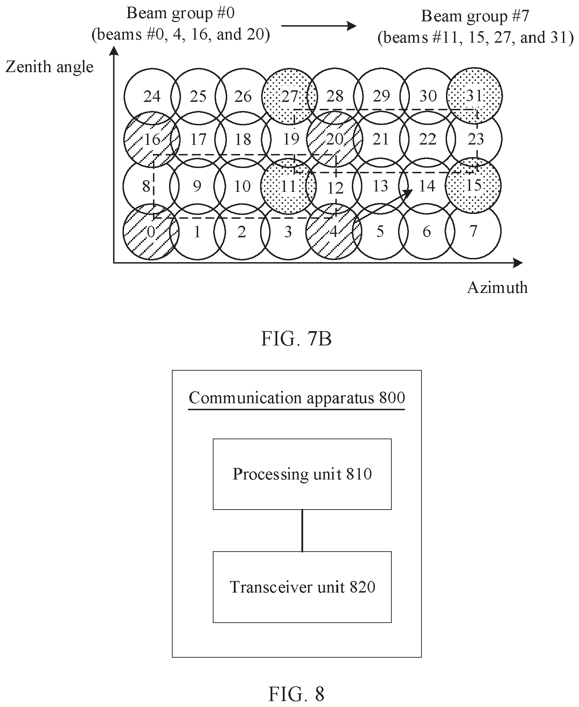

For ease of understanding, FIG. 7A and FIG. 7B are diagrams of a spatial domain angle offset between beams/beam groups.

FIG. 7A is a diagram of a spatial domain angle offset between beams. A beam #0 is the reference beam, and the spatial domain angle information of the reference beam includes a zenith angle and an azimuth of the reference beam. A beam width of the reference beam is W, for example, an HPBW. A width of the zenith angle of the reference beam is W_{Zenith}, and a width of the azimuth of the reference beam is W_{Azimuth}. Spatial domain angle information of a beam #4, a beam #16, and a beam #20 in a beam group #0 may be separately determined based on the spatial domain angle information of the reference beam (the beam #0) and according to the intra-group beam angle offset rule.

It should be understood that the intra-group beam angle offset rule is shown in the following formulas, and a width of a zenith angle and a width of an azimuth of a target beam may be respectively obtained according to the following formulas:
width of an azimuth of a beam #j: Azimuth of Beam #j=Azimuth of Beam #0+(mod(j, M)-0)*W°; and
width of a zenith angle of the beam #j: Zenith of Beam #j=Zenith of Beam #0+(floor(j/M)-0)*W°.

The beam #j is another beam in a same beam group as the reference beam (the beam #0), or may be understood as the target beam, and j is an identifier of the target beam. M represents a quantity of azimuth beams, and the quantity of azimuth beams may be understood as a quantity of beams having a same zenith angle. As shown in FIG. 7A, the quantity of azimuth beams is 8. W° represents the width of the azimuth of the reference beam and the width of the zenith angle of the reference beam. In the foregoing calculation formulas, an example in which the width of the azimuth W_{Azimuth} of the reference beam is the same as the width of the zenith angle W_{Zenith} (for example, W°) is used for description. mod(j, M) represents a remainder obtained by dividing j by M, and floor(j/M) represents a floor operation performed on a result obtained by dividing j by M.

It should be understood that the foregoing spatial domain angle information is calculated by using a beam width as an example. This is not limited in this embodiment of this application. The beam width may be replaced with an angle step, an azimuth angle step, a zenith angle step, or the like. The quantity M of azimuth beams may also be replaced with the quantity N of zenith angle beams. As shown in FIG. 7A, the quantity of zenith angle beams is 4.

According to the foregoing intra-group beam angle offset rule, spatial domain angle information of each beam in the beam group #0 shown in FIG. 7A is calculated as follows:

The spatial domain angle information of the beam #4 includes:
width of an azimuth of the beam #4: Azimuth of Beam #4=Azimuth of Beam #0+(mod(4, 8)-0)*W°=Azimuth of Beam #0+4W°; and
width of a zenith angle of the beam #4: Zenith of Beam #4=Zenith of Beam #0+(floor(4/8)-0)*W°=Zenith of Beam #0.

It may be learned that the width of the zenith angle of the beam #4 is consistent with the width of the zenith angle of the reference beam (the beam #0), and the width of the azimuth of the beam #4 is 4W° offset relative to the width of the azimuth of the reference beam (the beam #0), where the offset is consistent with the offset shown in FIG. 7A.

The spatial domain angle information of the beam #16 includes:
width of an azimuth of the beam #16: Azimuth of Beam #16=Azimuth of Beam #0+(mod(16, 8)-0)*W°=Azimuth of Beam #0; and
width of a zenith angle of the beam #16: Zenith of Beam #16=Zenith of Beam #0+(floor(16/8)-0)*W°=Zenith of Beam #0+2W°.

It may be learned that the width of the zenith angle of the beam #16 is 2W° offset relative to the width of the zenith angle of the reference beam (the beam #0), and the width of the azimuth of the beam #16 is consistent with the width of the azimuth of the reference beam (the beam #0), where the offset is consistent with the offset shown in FIG. 7A.

The spatial domain angle information of the beam #20 includes:
width of an azimuth of the beam #20: Azimuth of Beam #20=Azimuth of Beam #0+(mod(20, 8)-0)*W°=Azimuth of Beam #0+4W°; and
width of a zenith angle of the beam #20: Zenith of Beam #20=Zenith of Beam #0+(floor(20/8)-0)*W°=Zenith of Beam #0+2W°.

It may be learned that the width of the zenith angle of the beam #20 is 2W° offset relative to the width of the zenith angle of the reference beam (the beam #0), and the width of the azimuth of the beam #20 is 4W° offset relative to the width of the azimuth of the reference beam (the beam #0), where the offset is consistent with the offset shown in FIG. 7A.

In an implementation, the spatial domain angle information includes a reference beam group, beam spatial domain angle information of the reference beam group, and an inter-group beam angle offset rule.

FIG. 7B is a diagram of a spatial domain angle offset between beam groups. A beam group #0 is the reference beam group, and the beam spatial domain angle information of the reference beam group includes a zenith angle and an azimuth of the reference beam group. A width of the zenith angle of the reference beam group is W_{Zenith}, and a width of the azimuth of the reference beam group is W_{Azimuth}. Spatial domain angle information of a target beam group (for example, a beam group #6) may be determined based on the spatial domain angle information of the reference beam group (the beam group #0) and according to the inter-group beam angle offset rule.

It should be understood that the inter-group beam offset rule is shown in the following formulas, and a width of a zenith angle and a width of an azimuth of the target beam group may be respectively obtained according to the following formulas:
width of an azimuth of a beam group #k: Azimuth of Beam Group #k=Azimuth of Beam Group #0+(mod(k, P)-0)*W°; and
width of a zenith angle of the beam group #k: Zenith of Beam Group #k=Zenith of Beam Group #0+(floor (k/P)-0)*W°.

The beam group #k may be understood as the target beam group, and k is an identifier of the target beam group. P represents a quantity of azimuth beam groups. As shown in FIG. 7B, the quantity of azimuth beam groups is 4. W° represents the width of the azimuth of the reference beam group and the width of the zenith angle of the reference beam group. In the foregoing calculation formulas, an example in which the width of the azimuth W_{Azimuth} of the reference beam group is the same as the width of the zenith angle W_{Zenith} (for example, W°) is used for description. mod(k, P) represents a remainder obtained by dividing k by P, and floor(k/P) represents a floor operation performed on a result obtained by dividing k by P.

It should be understood that the foregoing spatial domain angle information is calculated by using a beam width as an example. This is not limited in this embodiment of this application. The beam width may be replaced with an angle step, an azimuth angle step, a zenith angle step, or the like. The quantity P of azimuth beam groups may also be replaced with the quantity Q of zenith angle beam groups. As shown in FIG. 7B, the quantity of zenith angle beam groups is 2.

According to the foregoing inter-group beam angle offset rule, spatial domain angle information of the beam group #7 shown in FIG. 7B is calculated as follows:

The spatial domain angle information of the beam group #7 includes:
width of an azimuth of the beam group #7: Azimuth of Beam Group #7=Azimuth of Beam Group #0+(mod(7, 4)-0)*W°=Azimuth of Beam #0+3W°; and
width of a zenith angle of the beam group #7: Zenith of Beam Group #7=Zenith of Beam Group #0+(floor (7/4)-0)*W°=Zenith of Beam Group #0+W°.

It may be learned that the width of the zenith angle of the beam group #7 is W° offset relative to the width of the zenith angle of the reference beam group (the beam group #0), and the width of the azimuth of the beam group #7 is 3W° offset relative to the width of the azimuth of the reference beam group (the beam group #0), where the offset is consistent with the offset shown in FIG. 7B.

Optionally, the spatial domain angle information may further include a fine offset and/or uncertainty information of the beam angle. It should be noted that the fine offset and/or the uncertainty information are/is used to support an angle jitter and a deviation of an analog beam.

For example, the fine offset is more refined than the spatial domain angle information. A width of the zenith angle and a width of the azimuth are measured in degrees, and the fine offset is measured in 0.1 degree. The uncertainty information may be a maximum error of an angle, a width, or a fine offset. For example, if the network device indicates, to the terminal device, that a width of a specific beam is x degrees, and the uncertainty information indicates that a maximum error of the width is y degrees, the width of the beam is within a range of [x-y, x+y].

S602: The network device sends a reference signal, and correspondingly the terminal device receives the reference signal.

It should be understood that the reference signal may also be referred to as a pilot or a pilot sequence, and may be used for channel estimation in the communication system.

It should be noted that a specific manner of time-frequency multiplexing, frequency division multiplexing, or code division multiplexing of the reference signal for beam measurement is not limited.

S603: The terminal device determines the target beam.

It should be understood that the terminal device may perform beam selection based on the spatial domain angle information. The terminal device calculates a spatial domain angle of each beam or beam group based on the spatial domain angle information obtained in step S601, to select a beam with more appropriate spatial domain angle information as the target beam.

Optionally, the terminal device determines corresponding beam quality based on the selected beam.

For example, the terminal device selects beams whose spatial domain angles are close, so that stability of a data throughput in a moving process of the terminal device can be improved.

For example, whether spatial domain angles between the beams are close may be measured by using the difference between the beam center angles or the difference between the peak angles. For example, when the difference between the beam center angles or the difference between the peak angles is less than the first isolation threshold, it may be considered that the spatial domain angles between the beams are close. Alternatively, whether spatial domain angles between the beams are close may be measured by using whether HPBWs of the beams overlap. For example, when the HPBWs of the beams overlap, it may be considered that the spatial domain angles between the beams are close. It should be noted that whether the spatial domain angles between the beams are close is measured by using the difference between the beam center angles or the difference between the peak angles and whether the HPBWs of the beams overlap is merely an example for description. A specific manner of determining whether the spatial domain angles are close is not limited in this embodiment of this application.

For example, the terminal device selects a beam pair with high spatial domain isolation, so that a capacity of SU multi-beam transmission can be increased, and a possibility that a plurality of beams are simultaneously blocked can be reduced.

Similar to that in step S303, CSI, an SINR, or other information indicating beam quality is obtained through calculation based on different beam measurement targets configured by the network device or autonomously selected by the terminal device.

S604: The terminal device sends target beam information, and correspondingly the network device receives the target beam information.

For example, the target beam information may include beam identification information and beam quality information.

Optionally, if the terminal device selects the beams whose spatial domain angles are close, the terminal device chooses to report identifiers of the beams whose spatial domain angles are close, an identifier of a beam group in which the beams are located, and beam quality information of the beams.

Optionally, if the terminal device selects the beam pair with high spatial domain isolation, the terminal device chooses to report an identifier of the beam pair with high spatial isolation, an identifier of a beam group in which the beam is located, and beam quality information of the beam pair.

Based on the foregoing solution, the spatial domain angle information is predefined, or is indicated by the network device to the terminal device based on the concurrent beam grouping information, so that overheads of indicating the beam spatial domain angle information by the network device are reduced, a purpose of measuring and reporting the beam by the terminal device is enhanced, and an opportunity of concurrent beam transmission by the network device is increased.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

It may be understood that in the foregoing method embodiments, a method implemented by the terminal device may alternatively be implemented by a component (for example, a chip or a circuit) that may be used in the terminal, and a method implemented by the network device may alternatively be implemented by a component (for example, a chip or a circuit) that may be used in the network device. The foregoing describes in detail the method in embodiments of this application with reference to FIG. 2 to FIG. 7A and FIG. 7B. The following describes a communication apparatus in embodiments of this application with reference to FIG. 8 to FIG. 11.

FIG. 8 is a diagram of a structure of a communication apparatus according to an embodiment of this application. The communication apparatus may include a processing unit 810 and a transceiver unit 820.

The communication apparatus 800 provided in this application may correspond to processes performed by the terminal device in the method embodiments in FIG. 2 to FIG. 7A and FIG. 7B. For a function of each unit/module in the communication apparatus, refer to the foregoing descriptions. Detailed descriptions are properly omitted herein.

It should be understood that the communication apparatus in FIG. 8 may be a terminal device, or may be a chip or an integrated circuit that may be used in the terminal device.

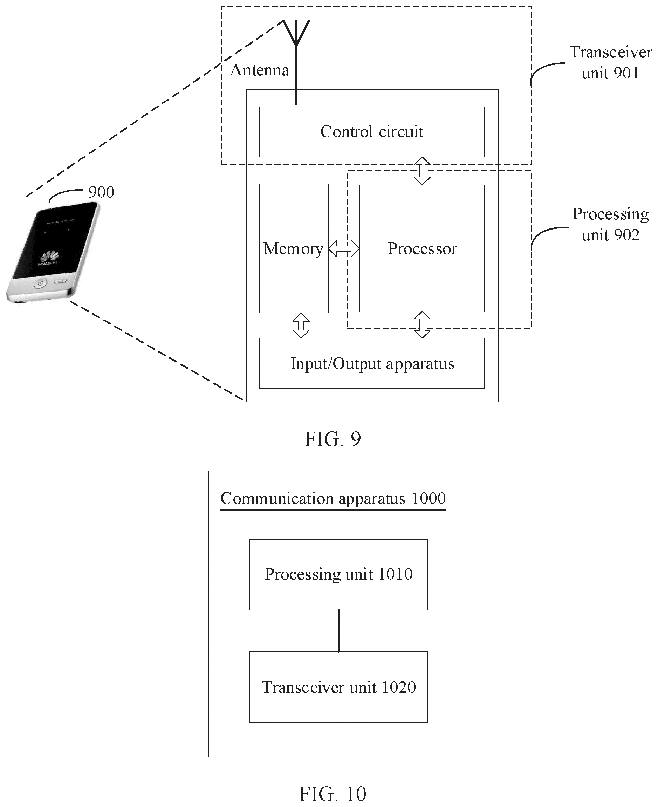

For example, the communication apparatus is the terminal device. FIG. 9 is a diagram of a structure of a terminal device according to an embodiment of this application. For ease of understanding and illustration, for example, the terminal device in FIG. 9 is a mobile phone. FIG. 9 shows only main components of the terminal device. The terminal device 900 shown in FIG. 9 includes a processor, a memory, a control circuit, and an antenna. Optionally, the terminal device may further include an input/output apparatus. It should be understood that the control circuit may be disposed in the processor, or may be located outside the processor and exists independently. This is not limited in embodiments of this application. The processor is mainly configured to process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the terminal device is powered on, the processor may read a software program in a storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 9 shows only one memory and one processor. In an actual terminal device, there may be a plurality of processors and memories. The memory may also be referred to as a storage medium, a storage device, or the like. This is not limited in embodiments of this application. It should be understood that the memory may be integrated in the processor, or may be located outside the processor and exists independently. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 9 may integrate functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In embodiments of this application, the antenna and the control circuit that have receiving and sending functions may be considered as a transceiver unit 901 of the terminal device 900, for example, configured to support the terminal device in performing the receiving and sending functions performed by the terminal device in the method embodiments in FIG. 2 to FIG. 7A and FIG. 7B. The processor having a processing function is considered as a processing unit 902 of the terminal device 900, and the processing unit 902 corresponds to the processing unit 810 in FIG. 8. As shown in FIG. 9, the terminal device 900 includes the transceiver unit 901 and the processing unit 902. The transceiver unit may also be referred to as a transceiver, a transceiver machine, a transceiver apparatus, or the like. The transceiver unit corresponds to the transceiver unit 820 in FIG. 8. Optionally, a component configured to implement the receiving function in the transceiver unit 901 may be considered as a receiving unit, and a component configured to implement the sending function in the transceiver unit 901 may be considered as a sending unit. In other words, the transceiver unit 901 includes the receiving unit and the sending unit. The receiving unit may also be referred to as a receiver machine, an input port, a receiving circuit, or the like. The sending unit may be referred to as a transmitter machine, a transmitter, a transmitting circuit, or the like. It may be understood that the transceiver unit may also be an interface circuit.

The processing unit 902 may be configured to execute instructions stored in the memory, to control the transceiver unit 901 to receive a signal and/or send a signal, to complete a function of the terminal device in the foregoing method embodiments. In an implementation, it may be considered to implement a function of the transceiver unit 901 through a transceiver circuit or a dedicated transceiver chip.

It should be understood that the terminal device 900 shown in FIG. 9 can implement processes related to the terminal device in the method embodiments in FIG. 2 to FIG. 7A and FIG. 7B. The operations and/or functions of the modules in the terminal device 900 are respectively intended to implement corresponding procedures in the foregoing method embodiments. For details, refer to the descriptions in the foregoing method embodiments. To avoid repetition, detailed descriptions are properly omitted herein.

FIG. 10 is a diagram of a structure of a communication apparatus according to an embodiment of this application. The apparatus 1000 may include a processing unit 1010 and a transceiver unit 1020.

The communication apparatus 1000 provided in this application may correspond to processes performed by the network device in the method embodiments in FIG. 2 to FIG. 7A and FIG. 7B. For a function of each unit/module in the communication apparatus, refer to the foregoing descriptions. Detailed descriptions are properly omitted herein.

It should be understood that the communication apparatus in FIG. 10 may be a network side device, or may be a chip or an integrated circuit that may be used in the network device side.

The network device 1100 may include one or more radio frequency units, for example, a remote radio unit (remote radio unit, RRU) 1110 and one or more baseband units (baseband units, BBU) (which may also be referred to as digital units (digital units, DU)) 1120. The RRU may be referred to as a transceiver unit 1110, and corresponds to the transceiver unit 1020 in FIG. 10. Optionally, the transceiver unit may also be referred to as a transceiver machine, a transceiver circuit, a transceiver, or the like, and may include at least one antenna 1111 and a radio frequency unit 1112. The part RRU is mainly configured to receive and send a radio frequency signal and perform conversion between the radio frequency signal and a baseband signal. The part BBU is mainly configured to perform baseband processing, control a base station, and the like. The RRU and the BBU may be physically disposed together, or may be physically disposed separately, namely, a distributed base station. It may be understood that the transceiver unit may also be an interface circuit.

The BBU 1120 is a control center of the base station, may also be referred to as a processing unit 1120, may correspond to the processing unit 1010 in FIG. 10, and is mainly configured to complete a baseband processing function.

In an example, the BBU 1120 may include one board or a plurality of boards, and the plurality of boards may jointly support a radio access network (for example, an LTE network) of a single access standard, or may respectively support radio access networks (for example, an LTE network, a 5G network, and another network) of different access standards. The BBU 1120 further includes a memory 1121 and a processor 1122. The memory 1121 is configured to store necessary instructions and data. The processor 1022 is configured to control the base station to perform a necessary action. It should be understood that the memory may be integrated in the processor, or may be located outside the processor and exists independently. This is not limited in embodiments of this application. The memory 1121 and the processor 1122 may serve the one board or the plurality of boards. In other words, a memory and a processor may be disposed on each board. Alternatively, the plurality of boards may share a same memory and a same processor. In addition, a necessary circuit may further be disposed on each board.

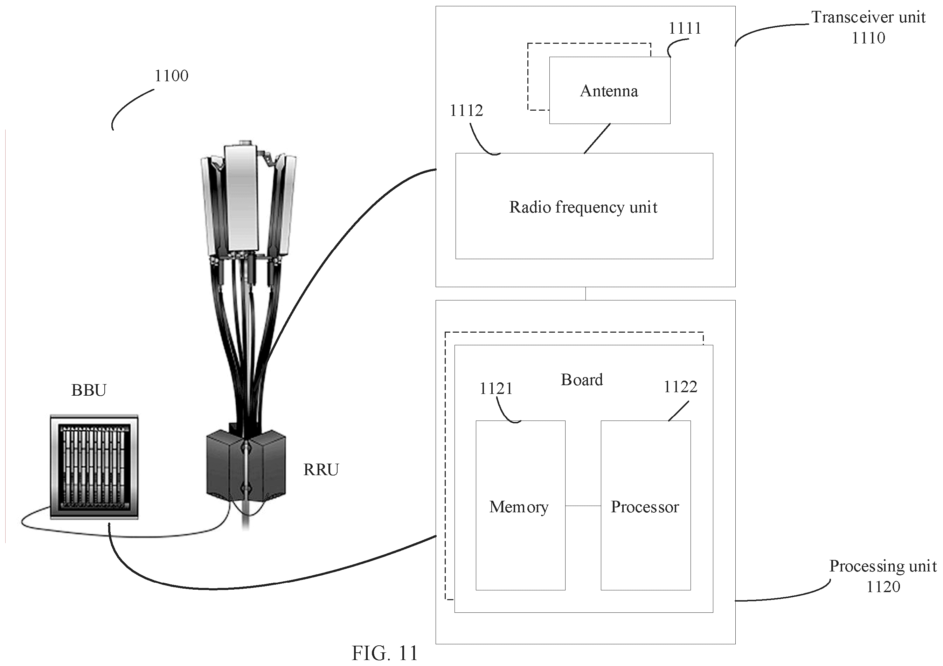

It should be understood that the network device 1100 shown in FIG. 11 can implement processes related to the network device in the method embodiments in FIG. 2 to FIG. 7A and FIG. 7B. The operations and/or functions of the modules in the network device 1100 are respectively intended to implement corresponding procedures in the foregoing method embodiments. For details, refer to the descriptions in the foregoing method embodiments. To avoid repetition, detailed descriptions are properly omitted herein.

An embodiment of this application further provides a processing apparatus. The processing apparatus includes a processor and an interface. The processor is configured to perform the communication method in any one of the foregoing method embodiments.

It should be understood that the processing apparatus may be a chip. For example, the processing apparatus may be a field-programmable gate array (field-programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing method can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein again.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synch link dynamic random access memory (synch link DRAM, SLDRAM), and a direct rambus random access memory (direct Rambus RAM, DR RAM). It should be noted that the memory of the system and method described in this specification includes but is not limited to these and any memory of another proper type.

An embodiment of this application further provides a communication system. The communication system includes the foregoing network device and terminal device.

An embodiment of this application further provides a computer-readable medium. The computer-readable medium stores a computer program. When the computer program is executed by a computer, the method in any one of the foregoing method embodiments is implemented.

An embodiment of this application further provides a computer program product. When the computer program product is executed by a computer, the method in any one of the foregoing method embodiments is implemented.

All or some of the foregoing embodiments may be implemented by using software, hardware, firmware, or any combination thereof. When software is used to implement the embodiments, all or some of embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

The network device and the terminal device in the foregoing apparatus embodiments completely correspond to the network device or the terminal device in the method embodiments. A corresponding module or unit performs a corresponding step. For example, a sending module (a transmitter) performs a sending step in the method embodiments, a receiving module (a receiver) performs a receiving step in the method embodiments, and steps other than sending and receiving may be performed by a processing module (a processor). For a function of a specific module, refer to a corresponding method embodiment. The sending module and the receiving module may form a transceiver module, and the transmitter and the receiver may form a transceiver, to jointly implement receiving and sending functions. There may be one or more processors.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a compute device and an application that runs on the compute device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with illustrative logical blocks (illustrative logical blocks) described in embodiments disclosed in this specification and steps (steps) may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending configuration information, wherein the configuration information comprises first information, or the configuration information comprises the first information and second information; and
the first information indicates a group identifier ID of at least one beam group and an ID of a beam, and the second information indicates a beam group characteristic; and
receiving measurement feedback information, wherein the measurement feedback information comprises a group ID of a target beam group, and the target beam group belongs to the at least one beam group.

2. The method according to claim 1, wherein the configuration information comprises beam spatial domain angle information, the beam spatial domain angle information is used to determine a spatial domain angle of the beam, and the spatial domain angle of the beam comprises a zenith angle of the beam and/or an azimuth of the beam.

3. The method according to claim 2, wherein the beam spatial domain angle information comprises an ID of a first reference beam and beam spatial domain angle information of the first reference beam.

4. The method according to claim 3, wherein the beam spatial domain angle information comprises a first intra-group beam angle offset rule, the first intra-group beam angle offset rule is used to determine a spatial domain angle of a beam other than the first reference beam in a first beam group, and the first beam group belongs to the at least one beam group.

5. The method according to claim 4, wherein the beam spatial domain angle information comprises an ID of a second reference beam and beam spatial domain angle information of the second reference beam.

6. The method according to claim 5, wherein the first intra-group beam angle offset rule is further used to determine a spatial domain angle of a beam other than the second reference beam in a second beam group, and the second beam group belongs to the at least one beam group.

7. The method according to claim 5, wherein the beam spatial domain angle information comprises a second intra-group beam angle offset rule, the second intra-group beam angle offset rule is used to determine a spatial domain angle of a beam other than the second reference beam in a second beam group, and the second beam group belongs to the at least one beam group.

8. The method according to claim 2, wherein the beam spatial domain angle information comprises a group ID of a reference beam group and beam spatial domain angle information of the reference beam group, the spatial domain angle of the beam is a spatial domain angle of a beam group other than the reference beam group, and the reference beam group belongs to the at least one beam group.

9. The method according to claim 8, wherein the beam spatial domain angle information comprises an inter-group beam angle offset rule.

10. The method according to any one of claims 2 to 9, wherein the beam spatial domain angle information comprises a fine offset and/or uncertainty information, and the fine offset and/or the uncertainty information are/is used to determine an angle jitter and a deviation of the beam.

11. The method according to any one of claims 1 to 10, wherein the measurement feedback information comprises an ID and/or beam quality information of a target beam, and the target beam is one or more beams in the target beam group.

12. The method according to claim 11, wherein the beam quality information comprises one or more of the following:
channel state information CSI, a signal-to-interference-plus-noise ratio SINR, or a reference signal received power RSRP.

13. The method according to claim 12, wherein when a measurement target is single-user SU multi-beam transmission, the beam quality information is the CSI, and the CSI comprises one of the following:
a precoding indicator PMI, a rank indicator RI, or a channel quality indicator CQI.

14. The method according to claim 12, wherein when a measurement target is multi-user MU multi-beam pairing, the beam quality information is the SINR.

15. The method according to any one of claims 11 to 14, wherein the ID of the target beam indicates one of the following:
an ID of a serving beam or an ID of an interference beam; and
the serving beam and the interference beam belong to the target beam group, and the interference beam is a beam in the target beam group other than the serving beam.

16. The method according to any one of claims 1 to 15, wherein the beam group characteristic comprises at least one of the following:
an intra-group concurrent beam transmission characteristic or an intra-group beam spatial isolation characteristic; and
the intra-group concurrent beam transmission characteristic indicates concurrent beam transmission in the target beam group, and the intra-group beam spatial isolation characteristic indicates that beam spatial isolation in the target beam group is greater than or equal to a first isolation threshold.

17. A communication method, comprising:
receiving configuration information, wherein the configuration information comprises first information, or the configuration information comprises the first information and second information; and
the first information indicates a group identifier ID of at least one beam group and an ID of a beam, and the second information indicates a beam group characteristic; and
sending measurement feedback information based on the configuration information, wherein the measurement feedback information comprises a group ID of a target beam group, and the target beam group belongs to the beam group.

18. The method according to claim 17, wherein the configuration information comprises beam spatial domain angle information; and
before sending the measurement feedback information based on the configuration information, the method further comprises:
determining a spatial domain angle of the beam based on the beam spatial domain angle information, wherein the spatial domain angle of the beam comprises a zenith angle of the beam and/or an azimuth of the beam.

19. The method according to claim 18, wherein the beam spatial domain angle information comprises an ID of a first reference beam and beam spatial domain angle information of the first reference beam.

20. The method according to claim 19, wherein the beam spatial domain angle comprises a first intra-group beam angle offset rule, and determining the spatial domain angle of the beam based on the beam spatial domain angle information comprises:
determining, according to the first intra-group beam angle offset rule and based on the ID of the first reference beam and the beam spatial domain angle information of the first reference beam, a spatial domain angle of a beam other than the first reference beam in a first beam group, wherein the first beam group belongs to the at least one beam group.

21. The method according to claim 20, wherein the beam spatial domain angle information comprises an ID of a second reference beam and beam spatial domain angle information of the second reference beam.

22. The method according to claim 21, wherein the method further comprises:
determining, according to the first intra-group beam angle offset rule and based on the ID of the second reference beam and the beam spatial domain angle information of the second reference beam, a spatial domain angle of a beam other than the second reference beam in a second beam group, wherein the second beam group belongs to the at least one beam group.

23. The method according to claim 21, wherein the beam spatial domain angle information comprises a second intra-group beam angle offset rule, and the method further comprises:
determining, according to the second intra-group beam angle offset rule and based on the ID of the second reference beam and the beam spatial domain angle information of the second reference beam, a spatial domain angle of a beam other than the second reference beam in a second beam group, wherein the second beam group belongs to the at least one beam group.

24. The method according to claim 18, wherein the beam spatial domain angle information comprises a group ID of a reference beam group and beam spatial domain angle information of the reference beam group, the spatial domain angle of the beam is a spatial domain angle of a beam group other than the reference beam group, and the reference beam group belongs to the at least one beam group.

25. The method according to claim 24, wherein the beam spatial domain angle information comprises an inter-group beam angle offset rule, and determining the spatial domain angle of the beam based on the beam spatial domain angle information comprises:
determining, according to the inter-group beam angle offset rule and based on the group ID of the reference beam group and the beam spatial domain angle information of the reference beam group, the spatial domain angle of the beam group other than the reference beam group.

26. The method according to any one of claims 18 to 25, wherein the beam spatial domain angle information comprises a fine offset and/or uncertainty information, and the fine offset and/or the uncertainty information are/is used to determine an angle jitter and a deviation of the beam.

27. The method according to any one of claims 17 to 26, wherein the measurement feedback information comprises an ID and/or beam quality information of a target beam, and the target beam is one or more beams in the target beam group; and
before sending the measurement feedback information based on the configuration information, the method further comprises:
determining the ID of the target beam group, the ID of the target beam, and the beam quality information based on the configuration information.

28. The method according to claim 27, wherein the beam quality information comprises one or more of the following:
channel state information CSI, a signal-to-interference-plus-noise ratio SINR, or a reference signal received power RSRP.

29. The method according to claim 28, wherein determining the ID of the target beam group, the ID of the target beam, and the beam quality information based on the configuration information comprises:
when a measurement target is single-user SU multi-beam transmission, determining the group ID of the target beam group, the ID of the target beam, and the CSI based on the configuration information, wherein the CSI comprises one of the following:
a precoding indicator PMI, a rank indicator RI, or a channel quality indicator CQI.

30. The method according to claim 28, wherein determining the ID of the target beam group, the ID of the target beam, and the beam quality information based on the configuration information comprises:
when a measurement target is multi-user MU multi-beam pairing, determining the group ID of the target beam group, the ID of the target beam, and the SINR based on the configuration information.

31. The method according to any one of claims 27 to 30, wherein the ID of the target beam indicates one of the following:
an ID of a serving beam or an ID of an interference beam; and
the serving beam and the interference beam belong to the target beam group, and the interference beam is a beam in the target beam group other than the serving beam.

32. The method according to any one of claims 17 to 31, wherein the beam group characteristic comprises at least one of the following:
an intra-group concurrent beam transmission characteristic or an intra-group beam spatial isolation characteristic; and
the intra-group concurrent beam transmission characteristic indicates concurrent beam transmission in the target beam group, and the intra-group beam spatial isolation characteristic indicates that beam spatial isolation in the target beam group is greater than or equal to a first isolation threshold.

33. A communication apparatus, comprising: a unit configured to perform the method according to any one of claims 1 to 16.

34. A communication apparatus, comprising: a unit configured to perform the method according to any one of claims 17 to 32.

35. A communication apparatus, comprising: a processor coupled to a memory, wherein the memory is configured to store a computer program, and the processor is configured to run the computer program, so that the communication apparatus performs the method according to any one of claims 1 to 16.

36. A communication apparatus, comprising: a processor coupled to a memory, wherein the memory is configured to store a computer program, and the processor is configured to run the computer program, so that the communication apparatus performs the method according to any one of claims 17 to 32.

37. A computer-readable storage medium, wherein the computer-readable storage medium stores a computer program; and when the computer program is executed by a computer, the computer is enabled to implement the method according to any one of claims 1 to 16 or claims 17 to 32.

38. A computer program product comprising instructions, wherein when the computer program product is run on a computer, the computer is enabled to perform the method according to any one of claims 1 to 16 or claims 17 to 32.

39. A chip, wherein the chip comprises a processor and a data interface, and the processor reads, through the data interface, instructions stored in a memory, to perform the method according to any one of claims 1 to 16 or claims 17 to 32.
